(19) **Europäisches Patentamt**
**European Patent Office**
**Office européen des brevets**

(11) **EP 1 779 624 B1**

(12) **EUROPÄISCHE PATENTSCHRIFT**

(45) Veröffentlichungstag und Bekanntmachung des Hinweises auf die Patenterteilung:
**20.03.2013 Patentblatt 2013/12**

(51) Int Cl.:
**H04L 27/26** *(2006.01)*  **H04B 7/06** *(2006.01)*

(21) Anmeldenummer: **05777718.7**

(22) Anmeldetag: **27.07.2005**

(86) Internationale Anmeldenummer:
**PCT/EP2005/053658**

(87) Internationale Veröffentlichungsnummer:
**WO 2006/018367 (23.02.2006 Gazette 2006/08)**

(54) **VERFAHREN ZUM ERZEUGEN VON PRÄAMBEL- UND SIGNALISIERUNGSSTRUKTUREN IN EINEM MIMO-OFDM-ÜBERTRAGUNGSSYSTEM**

METHOD FOR GENERATING PREAMBLE STRUCTURES AND SIGNALING STRUCTURES IN A MIMO-OFDM TRANSMISSION SYSTEM

PROCEDE POUR PRODUIRE DES STRUCTURES DE PREAMBULE ET DE SIGNALISATION DANS UN SYSTEME DE TRANSMISSION MIMO-OFDM

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **10.08.2004 DE 102004038834**

(43) Veröffentlichungstag der Anmeldung:
**02.05.2007 Patentblatt 2007/18**

(73) Patentinhaber: **Gigaset Communications GmbH**
**81379 München (DE)**

(72) Erfinder:
• **BRÜNINGHAUS, Karsten**
**38259 Salzgitter (DE)**
• **OBERMANNS, Sebastian**
**46395 Bocholt (DE)**

(74) Vertreter: **Michalski Hüttermann & Partner**
**Patentanwälte**
**Hafenspitze**
**Speditionstrasse 21**
**40221 Düsseldorf (DE)**

(56) Entgegenhaltungen:
• JIANHUA LIU ET AL: "A MIMO system with backward compatibility for OFDM based WLANs" 4TH IEEE WORKSHOP ON SIGNAL PROCESSING ADVANCES IN WIRELESS COMMUNICATIONS, 2003. SPAWC 2003. ROME, ITALY 15-18 JUNE 2003, PISCATAWAY, NJ, USA,IEEE, US, 15. Juni 2003 (2003-06-15), Seiten 130-134, XP010713389 ISBN: 0-7803-7858-X
• LI Y: "SIMPLIFIED CHANNEL ESTIMATION FOR OFDM SYSTEMS WITH MULTIPLE TRANSMIT ANTENNAS" IEEE TRANSACTIONS ON WIRELESS COMMUNICATIONS, IEEE, PISCATAWAY, US, Bd. 1, Nr. 1, Januar 2002 (2002-01), Seiten 67-75, XP001143806 ISSN: 1536-1276
• "Supplement to IEEE standard for information technology - telecommunications and information exchange between systems - local and metropolitan area networks - specific requirements. Part 11: wireless LAN Medium Access Control (MAC) and Physical Layer (PHY) specifications: high-speed physical layer" IEEE STD 802.11A-1999, 30. Dezember 1999 (1999-12-30), Seiten 1-90, XP002189725

**Beschreibung**

Die vorliegende Erfindung bezieht sich auf ein Verfahren zum Erzeugen von Präambel- und Signalisierungsstrukturen für Mehrantennen-OFDM-Übertragungssysteme, welches insbesondere in zukünftigen hochratigen WLANs (Wireless Local Area Network) aber auch in Mobilfunksystemen mit Mehrantennen-Technologie eingesetzt werden kann.

Die Übertragung einer bekannten oder zumindest in Teilen bekannten Präambel hat üblicherweise das Ziel, dem Empfänger eine schnelle Synchronisation und Kanalschätzung zu ermöglichen, so dass die nachfolgenden Daten möglichst fehlerfrei (d.h. im idealen Fall nur noch durch das Eingangsrauschen und/oder Interferenzen degradiert) ausgewertet werden können. Im Zusammenhang mit der Synchronisation lassen sich Takt-, Frequenz- und Symbolsynchronisation unterscheiden. Während sich die Taktsynchronisation auf eine Synchronisation der D/A und A/D-Wandlertakte im Sender und Empfänger bezieht, bezieht sich die Frequenzsynchronisation auf eine Synchronisation der Mischerfrequenzen. In einem OFDM-Übertragungssystem mit Guard-Intervall, wie es in der Erfindung betrachtet wird, ist zusätzlich eine Symbolsynchronisation erforderlich, deren Aufgabe es ist, das Auswertefenster für die (im Frequenzmultiplex übertragenen) Datensymbole so zu positionieren, dass keine (Kanalimpulsantwort kürzer als die Dauer des Guard-Intervalls) oder möglichst geringe (Kanalimpulsantwort länger als die Dauer des Guard-Intervalls) Intersymbol-Interferenzen auftreten.

Herkömmliche drahtlose OFDM-Übertragungssysteme wie sie beispielsweise in so genannten WLANs (wireless Local Area Networks) eingesetzt werden, verwenden üblicherweise nur eine Antenne im Sender und/oder Empfänger.

Demgegenüber stellen MIMO-OFDM-Übertragungssysteme (MIMO, Multiple Input Multiple Output) eine neuartige Erweiterung dar, die - in Abhängigkeit der Kanaleigenschaften - eine erhebliche Steigerung der spektralen Effizienz durch räumliches "Multiplexen" ermöglichen.

In diesem Fall muss die Präambel nicht nur die Schätzung eines einzigen Kanals im Empfänger unterstützen, sondern für jeden räumlich "gemultiplexten" Datenstrom müssen die Kanaleigenschaften im Empfänger auf der Basis der Präambel ermittelt werden können.

Die Aufgabe der Signalisierung ist es schließlich, den Empfänger über die im Sender verwendeten, physikalischen Übertragungsparameter wie z.B. Modulation und Codierung zu informieren.

Das Dokument »JIANHUA LIU ET AL: "A MIMO system with backward compatibility for OFDM based WLANs"; 4TH IEEE WORKSHOP ON SIGNAL PROCESSING ADVANCES IN WIRELESS COMMUNICATIONS, 2003. SPAWC 2003. ROME, ITALY 15-18 JUNE 2003, PISCATAWAY, NJ, USA, IEEE, US, 15. Juni2003 (2003-06-15), Seiten 130-134, XP010713389 ISBN: 0-7803-7858-X« beschreibt Präambel- und Signalisierungsstrukturen für ein Datenpaket in einem MIMO-OFDM-Übertragungssystem mit zwei Antennen, wobei die Präambelstruktur einen Kanalschätzabschnitt aufweist, der dem des korrespondierenden SISO-Systems entspricht, sodass diese eine IEEE 802.11a kompatible Paket-Präambel ist, und zwischen einem Signalisierungsabschnitt mit Signalisierungsfolgen und einem dem Signalisierungsabschnitt nachfolgenden Datenfeld jeweils einen Synchronisations- und Kanalschätzabschnitt pro Antenne folgt.

Die Erfindung liegt die Aufgabe zu Grunde ein Verfahren zum Erzeugen von Präambel- und Signalisierungsstrukturen für eine paketorientierte Datenübertragung auf Basis der MIMO-OFDM-Übertragungstechnik zu schaffen, so dass mit relativ geringem Prozessierungsaufwand im Empfänger eine gute Schätzgenauigkeit der Synchronisations- und Kanalparameter bei gleichzeitiger Abwärtskompatibilität zu bereits existierenden OFDM-Übertragungssystemen (insbesondere IEEE 802.11a, 802.11g) ermöglicht wird.

Erfindungsgemäß wird diese Aufgabe durch die Maßnahmen des Patentanspruchs 1 sowie alternativ durch die Maßnahmen des Patentanspruchs 8 gelöst.

Insbesondere durch Verwendung einer Synchronisationsfolge im Synchronisationsabschnitt der jeweiligen An-tennen gemäß $s_m(n) = DFT^{-1}\{S_m(k)\}$ mit $S_m(k) = S(k)\cdot e^{j\varphi_{k,m}}$ $n = 1,...,N$, können alle adressierten Empfänger sowohl das Signalisierungsfeld als auch das Nutzdatenfeld auswerten, auch wenn im Sender keine detaillierte a-priori-Information über den Kanal vorliegt. Wird für die Synchronisationsfolge für die jeweiligen Antennen die Beziehung

$$s_m(n) = \mathrm{DFT}^{-1}\{S_m(k)\} \quad \text{mit} \quad S_m(k) = \sum_{d=1}^{D_k} p_{k,m,d} \cdot S(k) \cdot e^{j\varphi_{k,m,d}} \qquad n = 1,...,N$$

verwendet, sind wiederum die adressierten Empfänger in der Lage sowohl das Signalisierungsfeld als auch das Nutzdatenfeld auszuwerten, wobei jedoch im Sender detaillierte a-priori-Informationen über den Kanal vorliegen. Die adressierten Empfänger können hierbei MIMO-Empfänger mit einer Vielzahl von Empfangsantennen, aber auch Empfänger mit nur einer Empfangsantenne darstellen, wodurch eine hochgradige Rückwärtskompatibilität auch zu bereits existierenden Übertragungssystemen ermöglicht ist.

Alternativ kann gemäß Patentanspruch 8 die Kanalschätzfolge $c_m(n)$ für die jeweilige Antennen aus einer Aneinanderreihung der OFDM Symbole $c_{m,x}(n)$ entsprechend

$$c_m(n) = g_{m,1}(n)c_{m,1}(n)g_{m,2}(n)c_{m,2}(n)\cdots g_{m,D}(n)c_{m,D}(n)$$

mit

$$c_{m,x}(n) = \text{DFT}^{-1}\{C_{m,x}(k)\} \quad \text{und} \quad C_{m,x}(k) = p_{k,m,x} \cdot C(k) \qquad n = 1,\ldots,N$$

bestehen, wodurch man in gleicher Weise für alle adressierten Empfänger sowohl ein Signalisierungsfeld als auch ein Nutzdatenfeld auswerten kann und eine Rückwärtskompatibilität zu herkömmlichen Übertragungssystemen ermöglicht.

Selbstverständlich können diese beiden Alternativen hinsichtlich der Ausgestaltung der Synchronisationsfolgen und der Kanalschätzfolgen auch miteinander kombiniert werden, wodurch sich eine Zuverlässigkeit des Gesamtsystems verbessert.

Der Synchronisationsfolge $s_m(n)$ kann entweder ein OFDM-typisches oder im Vorzeichen invertiertes Guard-Intervall vorangestellt werden, wobei sich die Synchronisationsfolge mindestens einmal periodisch wiederholt

Ferner kann zur Realisierung eines speziellen Transmit-Diversity-Verfahrens die Korrelation der Phasenwerte entsprechend der Gleichung $E\{e^{j\varphi_{k,m}} \cdot e^{-j\varphi_{k+\Delta k,m+\Delta m}}\} \rightarrow \begin{cases} 1 & \text{für } \Delta k = 0 \wedge \Delta m = 0 \\ 0 & \text{sonst} \end{cases}$ möglichst gering sein, wodurch alle Stationen des Übertragungssystems in der Lage sind, das komplette gesendete Datenpaket, d.h. Signalisierungsfeld und Nutzdatenfeld auswerten zu können, um allgemeine Informationen über das Netzwerk und über reservierte Zeitbereiche zu erlangen.

Vorzugsweise wird dieses sogenannte Transmit-Diversity-Verfahren durch die spezielle Realisierungsform

gemäß $\varphi_{k,m} = \dfrac{2\pi k(m-1)}{M_T}$ optimiert, wodurch sich ein sogenanntes "Cyclic Delay Diversity"-Verfahren (CCD) realisieren lässt. Aus Implementierungssicht ist dieses Verfahren vorteilhaft, weil im Gegensatz zum allgemeinen Ansatz nur eine einzige inverse Fourier-Transformation pro OFDM-Symbol im Sender erforderlich ist.

Zur Anwendung des vorgeschlagenen Verfahrens auf das WLAN gemäß IEEE 802.11-Standard wird ein Basis-Synchronisationssignal gemäß

$$S(k)_{-26:26} = \sqrt{\frac{13}{6}}\{0,0,1+j,0,0,0,-1-j,0,0,0,1+j,0,0,0,-1-j,0,0,0,-1-j,0,0,0,1+j,0,0,0,0,$$
$$0,0,0,-1-j,0,0,0,-1-j,0,0,0,1+j,0,0,0,1+j,0,0,0,1+j,0,0,0,1+j,0,0\}$$

und ein Basis-Kanalschätzsignal gemäß

$$C(k)_{-26:26} = \{1,1,-1,-1,1,1,-1,1,-1,1,1,1,1,1,1,-1,-1,1,1,-1,1,-1,1,1,1,1,0,$$
$$1,-1,-1,1,1,-1,1,-1,1,-1,-1,-1,-1,-1,1,1,-1,-1,1,1,-1,1,-1,1,1,1,1\}$$

verwendet, wodurch eine unmittelbare Implementierung in derartige bereits existierende Systeme ermöglicht wird.

Hinsichtlich der Kanalschätzfolge kann diese für die jeweilige Antenne auch aus einer Aneinanderreihung der OFDM Symbole $c_{m,x}(n)$ entsprechend

$$c_m(n) = g_{m,1}(n)\underbrace{c_{m,1}(n)\cdots c_{m,1}(n)}_{j}g_{m,2}(n)\underbrace{c_{m,2}(n)\cdots c_{m,2}(n)}_{j}\cdots g_{m,D}(n)\underbrace{c_{m,D}(n)\cdots c_{m,D}(n)}_{j}$$

gebildet werden, wobei j die Anzahl der Wiederholungen der OFDM Symbole $c_{m,x}(n)$ darstellt.

Hinsichtlich der verwendeten Guard-Intervalle können diese aus der einfachen OFDM-typischen Guard-Intervallfolge

$$g_{m,x}(n) = c_{m,x}(n+N-N_G) \qquad n = 1,\dots,N_G$$

oder aus der doppelten OFDM-typischen Guard-Intervallfolge

$$g_{m,x}(n) = c_{m,x}(n+N-2N_G) \qquad n = 1,\dots,2N_G$$

gebildet werden, wobei $N_G$ die Anzahl der Abtastwerte des Guard-Intervalls darstellt.

Ferner kann ein Signalisierungsabschnitt im Zeitbereich zwischen einer Nutzdatenstruktur und dem Kanalschätzabschnitt der Präambelstruktur angeordnet sein, wobei der Signalisierungsabschnitt eine Signalisierungsfolge für die jeweilige Antenne enthält, die aus einer Aneinanderreihung der OFDM Symbole $a_{m,x}(n)$ entsprechend

$$a_m(n) = g_{m,1}(n)a_{m,1}(n)g_{m,2}(n)a_{m,2}(n)\cdots g_{m,V}(n)a_{m,V}(n)$$

mit

$$a_{m,x}(n) = \mathrm{DFT}^{-1}\{A_{m,x}(k)\}$$

und

$$A_{m,x}(k) = I_x^{\mathrm{sig}}(k) \cdot \sum_{d=1}^{D_k} p_{k,m,d} \qquad n = 1,\dots,N$$

sowie der OFDM-typischen Guard-Intervallfolge

$$g_{m,x}(n) = a_{m,x}(n+N-N_G) \qquad n = 1,\dots,N_G$$

gebildet wird.

Alternativ kann der Kanalschätzabschnitt mit einer Kanalschätzfolge $c_m(n)$ in einen ersten Teil-Kanalschätzabschnitt und einen zweiten Teil-Kanalschätzabschnitt mit den Teil-Kanalschätzfolgen $c_m^1(n)$ sowie $c_m^2(n)$ und der Signalisierungsabschnitt in einen ersten Teil-Signalisierungsabschnitt und einen zweiten Teil-Signalisierungsabschnitt mit den Teil-Signalisierungsfolgen $a_m^1(n)$ sowie $a_m^2(n)$ unterteilt und in der zeitlichen Reihenfolge erster Teil-Kanalschätzabschnitt, erster Teil-Signalisierungsabschnitt, zweiter Teil-Kanalschätzabschnitt und zweiter Teil-Signalisierungsabschnitt neu zusammengesetzt werden, wobei die erste und zweite Teil-Kanalschätzfolge entweder gemäß

$$c_m^1(n) = g_{m,1}(n)c_{m,1}(n)$$

$$c_m^2(n) = g_{m,2}(n)c_{m,2}(n)\cdots g_{m,D}(n)c_{m,D}(n)$$

oder gemäß

$$c_m^1(n) = g_{m,1}(n)\underbrace{c_{m,1}(n)\cdots c_{m,1}(n)}_{j}$$

$$c_m^2(n) = g_{m,2}(n)\underbrace{c_{m,2}(n)\cdots c_{m,2}(n)}_{j}\cdots g_{m,D}(n)\underbrace{c_{m,D}(n)\cdots c_{m,D}(n)}_{j}$$

unter Verwendung eines einfachen oder doppelten OFDM typischen Guard-Intervalls gebildet wird,und wobei die erste Signalisierungsfolge gemäß $a_m^1(n) = g_{m,1}(n)a_{m,1}(n)g_{m,2}(n)a_{m,2}(n)\cdots g_{m,V'}(n)a_{m,V'}(n)$ und die zweite Teil-Signalisierungsfolge gemäß

$$a_m^2(n) = g_{m,V'+1}(n)a_{m,V'+1}(n)g_{m,V'+2}(n)a_{m,V'+2}(n)\cdots g_{m,V}(n)a_{m,V}(n)$$

mit

$$a_{m,x}(n) = \mathrm{DFT}^{-1}\{A_{m,x}(k)\} \quad \text{und} \quad A_{m,x}(k) = \begin{cases} I_x^{\mathrm{sig}}(k)\cdot p_{k,m,1} & \text{für} \quad 1 \le x \le V' \\ I_x^{\mathrm{sig}}(k)\cdot \sum_{d=1}^{D_k} p_{k,m,d} & \text{für} \quad V' < x \le V \end{cases}$$

sowie der OFDM-typischen Guard-Intervallfolge $g_{m,x}(n)=a_{m,x}(n + N - N_G)$ $n = 1,..., N_G$ gebildet wird. In diesem Fall wird wiederum eine Rückwärtskompatibilität ermöglicht, da nunmehr auch Stationen in einem herkömmlichen Übertragungssystem das Signalisierungsfeld auswerten können, wodurch die Anzahl der folgenden Kanalschätzsequenzen a-priori bekannt wird.

Vorzugsweise werden die Spaltenvektoren $P_{k,x}$, x = 1,..., $D_k$, der Matrix $P_k$ so sortiert werden, dass die Varianz der Leistungswerte $P_x = \sum_{\forall k}\sum_{m=1}^{M_T}|p_{k,m,x}|^2$ x = 1,..., D unter Berücksichtigung der Beziehung $p_{k,m,x} = 0$ für x > $D_k$ möglichst klein wird. Für jeden Subträger k werden hierbei die Spaltenvektoren $P_{k,x}$, mit x = 1, ..., $D_k$, der räumlichen Vorverzerrungsmatrix $P_k$ in einem ersten Schritt der Größe nach derart sortiert, so dass $\sum_{m=1}^{M_T}|p_{k,m,x}|^2 \ge \sum_{m=1}^{M_T}|p_{k,m,z}|^2$ für z > x erfüllt ist, und in einem zweiten Schritt einer zufälligen Permutation entsprechend der Vorschrift $P_{k,x} \rightarrow P_{k,(x+k)\bmod D_k}$ unterworfen.

In den weiteren Unteransprüchen sind weitere vorteilhafte Ausgestaltungen der Erfindung gekennzeichnet.

Die Erfindung wird nachstehend anhand von Ausführungsbeispielen unter Bezugnahme auf die Figuren näher beschrieben.

Es zeigen:

Figur 1 eine vereinfachte graphische Darstellung im Zeitbereich für ein Datensenden gemäß IEEE 802.11-Standard;

Figur 2 eine vereinfachte Darstellung einer Präambelstruktur gemäß IEEE 802.11-Standard;

Figur 3 eine vereinfachte Darstellung im Zeitbereich der Signalisierungsstruktur gemäß IEEE 802.11;

Figur 4 eine vereinfachte Tabelle zur Veranschaulichung der Bedeutung der einzelnen Bits gemäß Figur 3;

Figur 5 eine erfindungsgemäße Präambel- und Signalisierungsstruktur gemäß einem ersten Ausführungsbeispiel; und

Figur 6 eine erfindungsgemäße Präambel- und Signalisierungsstruktur gemäß einem zweiten Ausführungsbeispiel.

Die Erfindung wird nachfolgend anhand eines WLAN-Übertragungssystems (Wireless Local Area Network) gemäß IEEE 802.11-Standard als OFDM-Übertragungssystem beschrieben, wobei grundsätzlich jedoch auch alternative OFDM-Übertragungssysteme denkbar sind. Gemäß diesem IEEE 802.11-Standard, auf den an dieser Stelle explizit verwiesen wird, werden OFDM-Symbole in einem OFDM-Übertragungssystem (Orthogonal Frequency Division Multiplexing) verwendet. Ein derartiges Multiplexverfahren eignet sich insbesondere für stark gestörte terrestrische Übertragungen digitaler Rundfunksignale, da es unempfindlich gegenüber Echos ist.

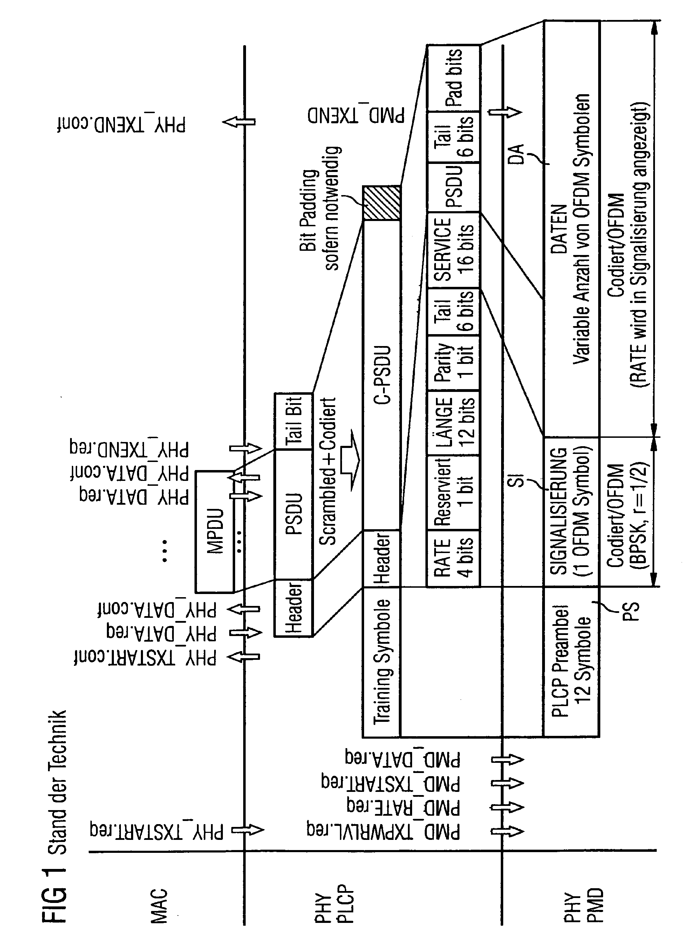

Vorbereitend wird daher zunächst eine grobe Übersicht der Datenpakete auf der physikalischen Schicht PHY (Physical Layer) und in der Übertragungsmedium-Zugriffssteuerung MAC (Medium Access Control) gemäß Figur 1 beschrieben, wie sie dem IEEE 802.11 zu entnehmen ist. Für eine detaillierte Beschreibung wird auf diesen Standard verwiesen.

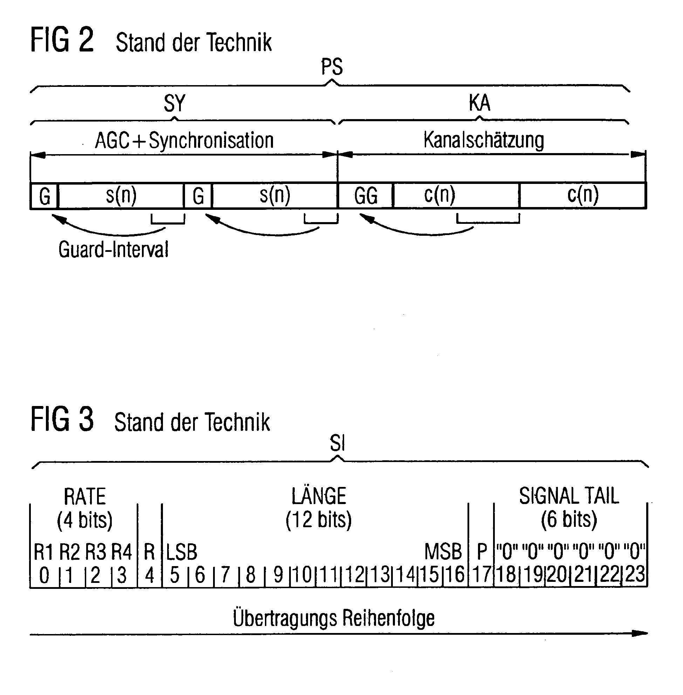

Gemäß Figur 1 bezeichnet MAC die Übertragungsmedium-Zugriffssteuerung (Medium Access Control) und PHY die physikalische Schicht (Physical Layer). Die physikalische Schicht wird weiter unterteilt in eine Konvergenzprozedur PLCP (Physical Layer Convergence Procedure) und das sogenannte PMD (Physical Medium Dependent). Mit MPDU wird die MAC-Protokolldateneinheit (MAC Protocol Data Unit) bezeichnet, während die PSDU die entsprechende PLCP-Servicedateneinheit (PLCP Service Data Unit) darstellt. Zur Realisierung im Wesentlichen einer Leistungsanpassung bzw. "Automatic Gain Control" AGC, einer Synchronisation und einer Kanalschätzung weist die Datenfolge Trainingssymbole in Form einer sogenannten PLCP-Präambel auf, welche nachfolgend als Präambelstruktur PS bezeichnet wird und in Figur 2 vereinfacht dargestellt ist.

Im WLAN besteht diese Präambelstruktur PS aus zwölf OFDM-Symbolen, denen ein Signalisierungsfeld bzw. eine Signalisierungsstruktur mit einem Signalisierungsabschnitt SI (ein OFDM-Symbol) folgt. Der Signalisierungsabschnitt SI gemäß WLAN-Standard ist in Figur 3 vereinfacht dargestellt, wobei sie auch einen Teil eines sogenannten "Headers" darstellt. Dem Signalisierungsfeld bzw. dem Signalisierungsabschnitt SI nachfolgend ist das eigentliche Nutzdatenfeld DA angeordnet, in der eine variable Anzahl von OFDM-Symbolen abgelegt ist und welches die vorstehend genannte PLCP-Servicedateneinheit PSDU beinhaltet.

Zum Übertragen von Daten wird MAC-seitig ein Befehl "PHY-TXSTART.request" abgesendet, wodurch die physikalische Schicht PHY in den Übertragungszustand gebracht wird. Die Konvergenzprozedur der physikalischen Schicht PLCP sendet daraufhin eine Vielzahl von Befehlen an die übertragungsmediumabhängige Schicht PMD, wodurch die Übertragung der Präambelstruktur PS und des Signalisierungsabschnitts SI veranlasst wird. Sobald die Übertragung der Präambelstruktur PS beginnt, erfolgt das Verwürfeln bzw. Scramblen und Codieren der eigentlichen Daten. Die gescrambelten und codierten Daten werden daraufhin zwischen der Übertragungsmediumzugriffssteuerung MAC und der Konvergenzprozedur der physikalischen Schicht PLCP durch eine Vielzahl von Datenaustauschbefehlen "PHY_DATA.req" und "PHY_DATA.conf" ausgetauscht. Die Datenübertragung bzw. die Übertragung des Datenpakets wird abgeschlossen, wenn die physikalische Schicht PHY den Empfangszustand angenommen hat, wobei jeder Befehl "PHY_TXEND.request" durch einen Befehl "PHY_TXEND.confirm" von der physikalischen Schicht bestätigt wird.

Demzufolge besteht ein Datenpaket auf der physikalischen Schicht PHY im Wesentlichen aus drei Teilen. Zunächst einer Präambelstruktur PS zur Parameterschätzung, d.h. einer Leistungsanpassung AGC (automatic game control), einer Frequenz- und OFDM-Symbolsynchronisation, sowie einer Kanalschätzung. Dieser Präambelstruktur PS folgt die Signalisierungsstruktur bzw. der Signalisierungsabschnitt SI, mit der die Signalisierung des verwendeten Betriebsmodus der physikalischen Schicht erfolgt (Coderate, Modulation) sowie die Länge des Datenpakets festgelegt wird. Im nachfolgenden Datenfeld DA befinden sich schließlich die eigentlichen Nutzdaten, welche aus einer variablen Anzahl von OFDM-Symbolen bestehen. Ihre Datenrate wird bereits im Signalisierungsfeld SI angezeigt.

Figur 2 zeigt eine detaillierte Darstellung der Präambelstruktur PS gemäß Figur 1, wobei gleiche Bezugszeichen gleiche oder entsprechende Signalfolgen bezeichnen und auf eine wiederholte Beschreibung nachfolgend verzichtet wird.

Gemäß Figur 2 besteht die Präambelstruktur PS aus vier OFDM-Symbolen, von denen zwei für die Leistungsanpassung AGC sowie eine Grob-Synchronisation und zwei OFDM-Symbole für eine Kanalschätzung sowie Fein-Synchronisation vorgesehen sind.

Mit G wird hierbei ein Guard-Intervall mit einer Guard-Intervallfolge bezeichnet, wobei GG ein doppeltes Guard-Intervall, d.h. ein Guard-Intervall von doppelter Dauer darstellt. Die Abtastwerte s(n) bezeichnen eine Synchronisationsfolge, d.h. die Signalfolge zur Unterstützung der Synchronisation im Empfänger. Diese Synchronisationsfolge ergibt sich aus der inversen Fourier-Transformation von

$$S(k)_{-26:26} = \sqrt{\frac{13}{6}}\{0,0,1+j,0,0,0,-1-j,0,0,0,1+j,0,0,0,-1-j,0,0,0,-1-j,0,0,0,1+j,0,0,0,0,$$
$$0,0,0,-1-j,0,0,0,-1-j,0,0,0,1+j,0,0,0,1+j,0,0,0,1+j,0,0,0,1+j,0,0\}$$

In ähnlicher Weise bezeichnet c(n) eine Kanalschätzfolge, d.h. eine Signalfolge zur Unterstützung der Kanalschätzung im Empfänger, die sich wiederum aus der inversen Fourier-Transformation von

$$C(k)_{-26:26} = \{1,1,-1,-1,1,1,-1,1,-1,1,1,1,1,1,1,-1,-1,1,1,-1,1,-1,1,1,1,1,0,$$
$$1,-1,-1,1,1,-1,1,-1,1,-1,-1,-1,-1,-1,1,1,-1,-1,1,1,-1,1,-1,1,1,1,1\}$$

ergibt.

S(k) bezeichnet hierbei ein Basis-Synchronisationssignal im Frequenzbereich und C(k) ein Basis-Kanalschätzsignal im Frequenzbereich, wie es für WLAN explizit im IEEE 802.11-Standard festgelegt ist.

Figur 3 zeigt eine vereinfachte Darstellung zur Veranschaulichung der Signalisierungsstruktur gemäß Figur 1, wobei gleiche Bezugszeichen wiederum gleiche Datenfelder oder Signalfolgen beschreiben und auf eine wiederholte Beschreibung nachfolgend verzichtet wird.

Die Abtastfolge des entsprechenden Signalisierungs-OFDM-Symbols resultiert wiederum aus der inversen Fourier-Transformation der in Figur 3 dargestellten Bitfolge. Diese Bitfolge enthält demzufolge ein Datenfeld mit vier Bits R1 bis R4 zur Festlegung einer Datenrate RATE, ein Datenfeld mit einem reservierten Bit R, ein Datenfeld LÄNGE zur Festlegung einer Datenlänge mit den Bits R5 bis R16, einem Parity-Bit P und einem Signalisierungstail SIGNAL TAIL mit sechs Bits zum Decodieren der Felder für die Datenrate RATE und die Datenlänge LÄNGE unmittelbar nach Empfang der Tailbits.

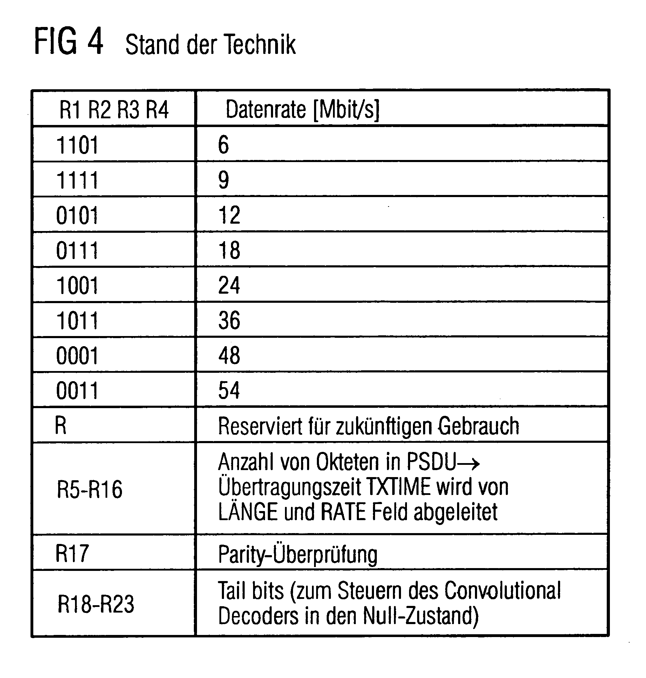

Die Bedeutung der einzelnen Bits R1 bis R23 ist in der Tabelle gemäß Figur 4 dargestellt. Das Datenpaket wird hierbei unter Verwendung des im RATE-Feldes spezifizierten Betriebsmodus für die physikalische Schicht (PHY-Modus) übertragen.

Gemäß der vorliegenden Erfindung soll ein derartiges OFDM-Übertragungssystem nunmehr auf ein MIMO-OFDM-Übertragungssystem mit einer Vielzahl von Antennen in jeweiligen Sendern und Empfängern angewendet werden, wobei sich hinsichtlich der Definition geeigneter Präambel- und Signalisierungsstrukturen folgende drei Fälle unterscheiden lassen.

Gemäß einem ersten Fall müssen alle Stationen, d.h. MIMO-Stationen (Multiple Input Multiple Output) und SISO-Stationen (Single Input Single Output) in der Lage sein, das komplette gesendete Datenpaket, d.h. Signalisierungsfeld und Datenfeld auswerten zu können, um allgemeine Informationen über das Netzwerk und über reservierte Zeitbereiche zu erlangen. Dies betrifft insbesondere die Rahmen "Beacon", RTS (Request To Send), CTS (Clear To Send), CTS-self und CF-end (Contention Free).

In einem zweiten Fall müssen alle Stationen in der Lage sein, zumindest das Signalisierungsfeld SI auswerten zu können.

In einem dritten Fall müssen nur die adressierten Empfänger in der Lage sein das Signalisierungsfeld und das Datenfeld auswerten zu können.

Die bisherigen Überlegungen zur Realisierung eines MIMO-OFDM-Übertragungssystems zielen ausschließlich auf den Fall 2 ab. Bei diesem zweiten Fall können zwar das Ende eines Datenpakets auf der Basis des "RATE"- und "LÄNGE"-Feldes genau vorhergesagt werden. Kollisionen werden durch das im Übertragungssystem ohnehin verwendete Trägerzugangsverfahren mit Kollisionsvermeidung (CSMA/CA, Carrier Sense Multiple Access with Collision Avoidance) jedoch auch bei fehlender Kenntnis dieser Parameter vermieden. Selbst wenn der Parity-Check ein falsches Ergebnis liefert, wobei das Vorhandensein eines gültigen Signalisierungsfeldes angezeigt wird, obwohl es tatsächlich nicht vorhanden ist, und damit begonnen wird den nicht in der bekannten Form existenten Datenanteil auszuwerten, vermeidet das in IEEE 802.11 dargestellte PLCP-Empfangsverfahren jegliche negativen Auswirkungen auf die gerade aktive Datenübertragung zwischen entsprechenden Geräten.

Bei den nachfolgenden Betrachtungen der Fälle 1 bis 3 wird daher vorausgesetzt, dass die angewendete MIMO-Signalprozessierung im Sender auf jedem Subträger k durch eine lineare Operation beschrieben werden kann, so dass nach der OFDM- bzw. OFDM-Prozessierung im Empfänger das Signal

$$[R_k]_{M_R x1} = [H_k]_{M_R x M_T} \cdot [P_k]_{M_T x D_k} \cdot [I_k]_{D_k x1} = [G_k]_{M_R x D_k} \cdot [I_k]_{D_k x1}$$

vorliegt. Hierbei bezeichnet $R_k$ den Empfangsvektor, $H_k$ die Kanalmatrix, $P_k$ die MIMO-"Preprocessing"-Matrix und $I_k$ den Datenvektor. Jegliche Rauscheinflüsse oder andere Störgrößen sind hierbei vernachlässigt. Die tiefgestellten Indices neben den eckigen Klammern kennzeichnen die Matrixdimensionen, wobei die eckigen Klammern nur eingefügt sind, um eine klare Trennung zwischen den Matrixindices und den Matrixdimensionsindices zu erreichen.

Bevor nachfolgend die einzelnen Fälle und die zugehörigen Präambel- und Signalisierungsstrukturen beschrieben werden, erfolgt zunächst eine Definition der verwendeten Abkürzungen:

G : Guard Intervall

GG : Guard Intervall doppelter Dauer (= doppeltes Guardintervall)

DFT : Diskrete Fourier-Transformation

DFT$^{-1}$ : inverse Diskrete Fourier-Transformation

OFDM : Orthogonal Frequency Division Multiplexing

$M_T$ : Anzahl der Sendeantennen

$n$ : Zeitindex (= Abtastwert)

$x$ : noch ein Zeitindex (= OFDM Symbolindex)

$m$ : Antennenindex

$d$ : Index des räumlichen Datenstroms

$k$ : Subträgerindex (=Frequenzindex; Voraussetzung: OFDM basiertes Übertragungssystem)

$V'$ : Anzahl der OFDM Symbole, die zur Übertragung einer Teil-Signalisierungsinformation erforderlich ist

$V$ : Anzahl der OFDM Symbole, die zur Übertragung einer Gesamt-Signalisierungsinformation erforderlich ist

$L$ : Anzahl der OFDM Symbole, auf denen Nutzdaten übertragen werden

$N$ : Anzahl der Abtastwerte pro OFDM Symbol (abhängig von der D/A bzw. A/D-Wandlerrate)

$D_k$ : Anzahl der räumlichen Datenströme, die auf dem k-ten Subtäger übertragen werden

$D$ : maximale Anzahl der räumlichen Datenströme über alle Subträger, $D = \max\limits_{\forall k} D_k$

$\varphi_{k,m}$ : Pseudo-zufällige (aber dem Empfänger bekannte) Frequenz- (Index $k$) und Antennen-abhängige (Index m) Phasendrehung (des Basis-Synchronisationssignals)

$\varphi_{k,m,d}$ : Pseudo-zufällige (aber dem Empfänger bekannte) Frequenz- (Index $k$), Antennen- (Index $m$) und Raum-abhängige (Index d) Phasendrehung (des Basis-Synchronisationssignals)

$$[P_k]_{M_T x D_k} = (P_{k,1}, P_{k,2}, \ldots, P_{k,D_k}) = \begin{pmatrix} p_{k,1,1} & p_{k,1,2} & \cdots & p_{k,1,D_k} \\ p_{k,2,1} & p_{k,1,2} & & p_{k,1,D_k} \\ \vdots & & \ddots & \vdots \\ p_{k,M_T,1} & p_{k,M_T,2} & \cdots & p_{k,M_T,D_k} \end{pmatrix} \quad :$$

Matrix der Dimension $M_T \times D_k$, die zur räumlichen Vorverzerrung der Nutzdaten auf dem $k$-ten Subträger eingesetzt wird

$P_{k,d}$ : d-ter Spaltenvektor der Matrix $[P_k]_{M_T x D_k}$

$p_{x,m,d}$ : m-tes Zeilen- und d-tes Spaltenelement der Matrix $[T_k]$

$s_m(n)$: Synchronisationsfolge (= Signalfolge zur Unterstützung der Synchronisation im Empfänger), die über Antenne $m$ übertragen wird.

$S(k)$ : Basis-Synchronisationssignal im Frequenzbereich

$S_m(k)$: Synchronisationssignal im Frequenzbereich, das über Antenne $m$ übertragen wird

$c_{m,x}(n)$: x-te Kanalschätzfolge (= Signalfolge zur Unterstützung der Kanalschätzung im Empfänger), die über Antenne m übertragen wird

$C(k)$: Basis-Kanalschätzsignal im Frequenzbereich

$C_{m,x}(k)$: x-tes Kanalschätzsignal im Frequenzbereich, das über Antenne $m$ übertragen wird

$a_{m,x}(n)$: x-te Signalisierungsfolge (= Datenfolge mit Signalisierungsinformation hinsichtlich des verwendeten Übertragungsmodus), die über Antenne $m$ übertragen wird

$A_{m,x}(k)$: x-tes Signalisierungssignal im Frequenzbereich, das über Antenne $m$ übertragen wird

$I_x^{sig}(k)$ : Signalisierungsinformation (beinhaltet Information z.B. über Codierung und Modulation jedes einzelnen räumlichen Datenstroms, Länge des Datenpakets, ...), die auf dem $k$-ten Subträger des $x$-ten OFDM Signalisierungssymbols übertragen wird.

$d_{m,x}(n)$: x-te Datenfolge, die über Antenne $m$ übertragen wird

$I_{d,x}(k)$ : Information, die auf dem d-ten räumlichen Datenstrom des $k$-ten Subträger des $x$-ten OFDM Nutzdatensymbols übertragen wird.

$D_{m,x}(k)$: x-tes Datensignal im Frequenzbereich, das über Antenne $m$ übertragen wird

Anmerkung: Was hier als "Folge" bezeichnet wird, sind die Abtastwerte eines OFDM Symbols, d.h. $n$ = 1, ..., $N$

Fall 1:

Grundsätzlich gilt, dass diejenigen Datenpakete, die wichtige Informationen über reservierte Ressourcen oder Netzwerkelemente beinhalten, nicht nur von allen Stationen unterschildlichen Typs (d.h. MIMO- oder SISO-Stationen), sondern auch in maximaler Kommunikationsreichweite noch auswertbar sein müssen, weshalb es hier wenig Sinn macht räumliches Multiplexing anzuwenden. Im Gegenteil wird nur ein Datenstrom mit einer möglichst kleinen Datenrate übertragen. Liegt beispielsweise ein MIMO-Sender vor, d.h. der Sender weist mehrere Antennen auf, so kann die Detektionssicherheit im Empfänger durch Anwendung eines Transmit-Diversity-Verfahren erhöht werden. Dabei gilt die Einschränkung, dass das eingesetzte Verfahren aus Kompatibilitätsgründen für alle Stationen transparent sein muss.

Ein Transmit-Diversity-Verfahren, das diese Eigenschaft erfüllt, ist beispielsweise durch einen Preproces-sing-Vektor der Form

$$[\mathbf{P}_k]_{M_T x1} = (e^{j\varphi_{k,1}}, e^{j\varphi_{k,2}}, \ldots, e^{j\varphi_{k,M_T}})^T$$

charakterisiert. Genauer gesagt wird jeder Subträger *k* auf jeder Antenne m mit einer pseudo-zufälligen Phasendrehung $\varphi_{k,m}$ beaufschlagt. Ohne Einschränkung der Allgemeinheit lässt sich $\varphi_{k,1} = 0$ setzen, so dass der SISO-Einantennenfall als Spezialfall unverändert enthalten ist. Ohne zunächst eine Phasenfolge im Detail zu spezifizieren, kann allgemein gefordert werden, dass die Korrelation der Phasenwerte möglichst gering ist. Dies entspricht der Beziehung:

$$E\{e^{j\varphi_{k,m}} \cdot e^{-j\varphi_{k+\Delta k, m+\Delta m}}\} \rightarrow \begin{cases} 1 & \text{für } \Delta k = 0 \wedge \Delta m = 0 \\ 0 & \text{sonst} \end{cases} .$$

Eine spezielle Realisierungsform dieses vorgeschlagenen Preprocessings stellt das sogenannte CDD-Verfahren (Cyclic Delay Diversity) mit

$$\varphi_{k,m} = \frac{2\pi k(m-1)}{M_T}$$

dar. Aus Implementierungssicht ist das CDD-Verfahren vorteilhaft, weil im Gegensatz zum allgemeinen Ansatz nur eine einzige inverse Fourier-Transformation pro OFDM-Symbol (bzw. pro OFDM-Symbol) im Sender erforderlich ist.

Gemäß diesem ersten Fall werden demzufolge MIMO-Stationen, die mit mehreren Antennen ausgestattet sind, verwendet, welche Datenpakete versenden, die von allen Stationen, d.h. sowohl MIMO- als auch SISO-Stationen verstanden werden. Hierbei wird auf jedem Subträger und jeder Antenne ein Transmit-Diversity-Verfahren in Form einer pseudo-zufälligen Phasendrehung angewendet, wobei insbesondere ein CDD-Verfahren zum Einsatz kommt. Die ver-wendeten Phasenvektoren $P_k$ sind hierbei für alle OFDM-Symbole inklusive der Präambel-Symbole S(k) und C(k) identisch. Ansonsten wird die gleiche "PLCP-Transmitprocedure" wie in Figur 1 beispielsweise gemäß IEEE 802.11 verwendet. Diese Vorgehensweise ist auch dann noch sinnvoll, wenn keine SISO-Geräte aktiv sind, d.h. keine Kompatibilitätsanforderungen bestehen.

Angemerkt sei noch, dass das beschriebene Verfahren für SISO-Geräte nur dann wirklich transparent ist, wenn im Zusammenhang mit der Kanalschätzung im Empfänger ausschließlich eine Filterung im Zeitrichtung, d.h. Mittelung über die beiden c(n)-Sequenzfolgen erfolgt, und keine Filterung in Frequenzrichtung durchgeführt wird.

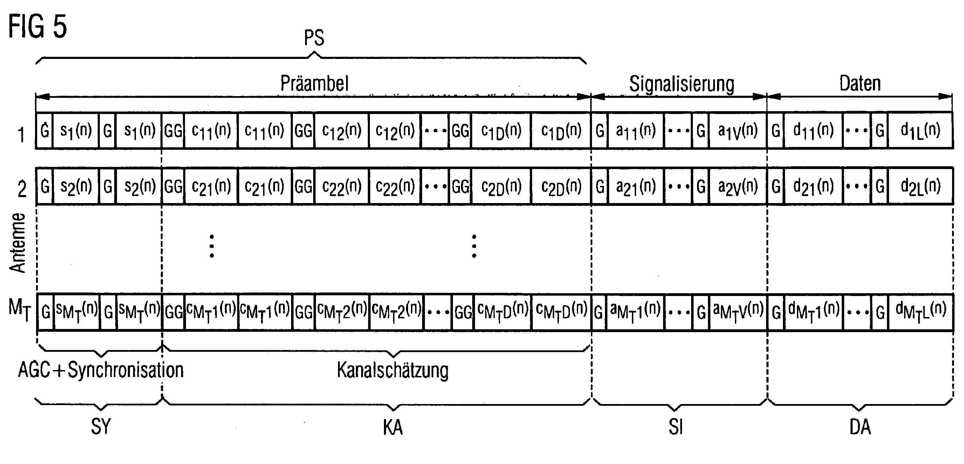

Figur 5 zeigt eine vereinfachte Darstellung eines Datenpakets mit einer erfindungsgemäßen Präambel- und Signalisierungsstruktur gemäß einem ersten Ausführungsbeispiel.

Gemäß Figur 5 sind für jeweilige Antennen 1, 2, ... $M_T$ zugehörige Datenpakete in einem Frequenzbereich dargestellt, wobei die Datenpakete für die einzelnen Antennen im Wesentlichen einem Datenpaket gemäß Figuren 1 bis 4 entsprechen, sofern ein MIMO-OFDM-Übertragungssystem gemäß WLAN realisiert werden soll.

Die in Figur 5 dargestellten Präambelstrukturen für die jeweiligen Antennen sind demzufolge im Zeitbereich und diskret dargestellt.

Fall 3:

Wenn gemäß Fall 3 nur der adressierte MIMO-Empfänger in der Lage sein muss das gesendete Datenpaket tatsächlich auswerten zu können, ist der Freiheitsgrad hinsichtlich des Designs der Präambelstruktur PS sowie der verwendeten Signalisierungsstruktur SI maximal. Die Anzahl D der Kanalschätzfolge-Sequenzpaare c(n) zur Kanalschätzung entspricht hierbei der maximalen Anzahl der Datenströme, die pro Subträger k übertragen werden sollen, d.h. D = max{$D_k$}. Die Daten auf jedem Subträger werden unter Verwendung der Matrizen

$$[\mathbf{P}_k]_{M_T x D_k} = (\mathbf{P}_{k,1}, \mathbf{P}_{k,2}, ..., \mathbf{P}_{k,D_k}) = \begin{pmatrix} p_{k,1,1} & p_{k,1,2} & \cdots & p_{k,1,D_k} \\ p_{k,2,1} & p_{k,1,2} & & p_{k,1,D_k} \\ \vdots & & \ddots & \vdots \\ p_{k,M_T,1} & p_{k,M_T,2} & \cdots & p_{k,M_T,D_k} \end{pmatrix}$$

übertragen. Hinsichtlich des Preprocessing werden erfindungsgemäß nachfolgende Verarbeitungen als besonders leistungsfähig angesehen:

Für die Synchronisationsfolgen s(n) können zwei unterschiedliche Varianten angewendet werden:

Gemäß Variante a) erfüllen die Synchronisationsfolgen für die jeweiligen Antennen die Beziehung

$$s_m(n) = \mathrm{DFT}^{-1}\{S_m(k)\} \quad \text{mit} \quad S_m(k) = S(k) \cdot e^{j\varphi_{k,m}} \qquad n = 1,...,N ,$$

so dass möglichst unkorrelierte Signale über die einzelnen Antennen übertragen werden. Diese Variante a ist insbesondere dann anzuwenden, wenn im Sender keine detaillierte a-priori-Information über den jeweiligen Kanal vorliegt.

Gemäß einer Variante b) werden die Synchronisationsfolgen für die jeweiligen Antennen die Gleichung

$$s_m(n) = \mathrm{DFT}^{-1}\{S_m(k)\} \quad \text{mit} \quad S_m(k) = \sum_{d=1}^{D_k} p_{k,m,d} \cdot S(k) \cdot e^{j\varphi_{k,m,d}} \qquad n = 1,...,N$$

erfüllen, wobei diese Variante b) insbesondere dann angewendet wird, wenn im Sender detaillierte a-priori-Informationen über den jeweiligen Kanal vorliegen.

Zur Adaption dieses Verfahrens auf beispielsweise ein WLAN-Übertragungssystem wird für das Basis-Synchronisationssignal

$$S(k)_{-26:26} = \sqrt{\frac{13}{6}}\{0,0,1+j,0,0,0,-1-j,0,0,0,1+j,0,0,0,-1-j,0,0,0,-1-j,0,0,0,1+j,0,0,0,0,$$
$$0,0,0,-1-j,0,0,0,-1-j,0,0,0,1+j,0,0,0,1+j,0,0,0,1+j,0,0,0,1+j,0,0\}$$

verwendet, wie es im Standard IEEE 802.11 festgelegt ist.

Gemäß Figur 5 können diesen Synchronisationsfolge $s_m$(n) jeweils ein OFDM-typisches Guard-Intervall G vorangestellt werden, wobei die Synchronisationsfolge $s_m$(n) mindestens einmal periodisch wiederholt wird. Alternative können auch im Vorzeichen invertierte Guard-Intervalle vorangestellt werden.

Alternativ oder zusätzlich können jedoch auch die Kanalschätzfolgen c(n) zur Realisierung eines SISO-kompatiblen MIMO-Übertragungssystems verwendet werden.

Demzufolge können die Kanalschätzfolgen für die jeweiligen Antennen 1 bis $M_T$ in den jeweiligen Kanalschätzabschnitten KA der Präambelstruktur PS gemäß Figur 5 einer Aneinanderreihung der OFDM Symbole $c_{m,x}$(n) entsprechend

$$c_m(n) = g_{m,1}(n)c_{m,1}(n)g_{m,2}(n)c_{m,2}(n)\cdots g_{m,D}(n)c_{m,D}(n)$$

bestehen
und die nachfolgende Gleichung

$$c_{m,x}(n) = \mathrm{DFT}^{-1}\{C_{m,x}(k)\} \quad \text{und} \quad C_{m,x}(k) = p_{k,m,x} \cdot C(k) \qquad n = 1,...,N$$

erfüllen.

Hierbei wird angenommen, dass der Empfänger die Anzahl D der Kanalschätz-Sequenzpaare zur Kanalschätzung unmittelbar aus dem Empfangssignal ableiten kann (beispielsweise durch Bestimmung der Autokorrelationsfunktion (AKF) im Abstand 4 von 64 Abtastwerten über einem Zeitfenster der selben Länge), so dass eine Signalisierung dieses Parameters nicht zwingend erforderlich ist.

Wiederum kann zur Anpassung an das eingangs beschriebene WLAN-Übertragungssystem ein in IEEE 802.11 festgelegtes Basis-Kanalschätzsignal

$$C(k)_{-26:26} = \{1,1,-1,-1,1,1,-1,1,-1,1,1,1,1,1,1,-1,-1,1,1,-1,1,-1,1,1,1,1,0,$$
$$1,-1,-1,1,1,-1,1,-1,1,-1,-1,-1,-1,-1,1,1,-1,-1,1,-1,1,-1,1,1,1,1\}$$

verwendet werden. Falls $D_k < D...$, so existiert $P_{k,m,x}$ im Bereich $D_k < x \leq D$ nicht und ist entsprechend zu Null zu setzen.

Wiederum kann auch die Kanalschätzfolge $c_m(n)$ mindestens einmal periodisch wiederholt werden. Beispielsweise wird die Kanalschätzfolge $c_m(n)$ für die jeweilige Antenne aus einer Aneinanderreihung der OFDM Symbole $c_{m,x}(n)$ entsprechend

$$c_m(n) = g_{m,1}(n)\underbrace{c_{m,1}(n)\cdots c_{m,1}(n)}_{j}g_{m,2}(n)\underbrace{c_{m,2}(n)\cdots c_{m,2}(n)}_{j}\cdots g_{m,D}(n)\underbrace{c_{m,D}(n)\cdots c_{m,D}(n)}_{j}$$

gebildet, wobei j die Anzahl der Wiederholungen der OFDM Symbole $c_{m,x}(n)$ darstellt.

Obwohl gemäß Figur 5 für die Kanalschätzfolge ein Guard-Intervall GG aus der doppelten OFDM-typischen Guard-Intervallfolge $g_{m,x}(n) = c_{m,x}(n + N - 2N_G)$ $n = 1,...,2N_G$ gebildet wird, wobei $N_G$ die Anzahl der Abtastwerte des Guard-Intervalls darstellt, kann das Guard-Intervall auch aus der einfachen OFDM-typischen Guard-Intervallfolge $g_{m,x}(n) = c_{m,x}(n + N - N_G)$ $n = 1,...,N_G$ Gebildet werden.

An dieser Stelle seien weiterhin Anmerkungen zur Leistungsnormierung angefügt.

Normalerweise ist die Sendeleistung über alle OFDM-Nutzsymbole (d.h. diejenigen Symbole, die Nutzinformation beinhalten) konstant, d.h.

$$P_{S,data,x} = E\left\{\frac{1}{N}\sum_{n=1}^{N}\sum_{m=1}^{M_T}|d_{m,x}(n)|^2\right\} \propto E\left\{\sum_{\forall k}\sum_{m=1}^{M_T}\sum_{d=1}^{D_k}|p_{k,m,d} \cdot I_{d,x}(k)|^2\right\}$$
$$= \sum_{\forall k}\sum_{m=1}^{M_T}\sum_{d=1}^{D_k}|p_{k,m,d}|^2 \cdot E\{|I_{d,x}(k)|^2\} = \text{const} \quad \text{für alle } x = 1,...,L$$

wobei E{ } den Erwartungswert bezeichnet.

Die Sendeleistung der Kanalschätzfolge beträgt:

$$P_{S,est,x} = \frac{1}{N}\sum_{n=1}^{N}\sum_{m=1}^{M_T}|c_{m,x}(n)|^2 \propto \sum_{\forall k}\sum_{m=1}^{M_T}|p_{k,m,x}|^2 \cdot |C(k)|^2 \qquad x = 1,...,D$$

Hierbei ergibt sich folgende Feststellung:

Beide Terme unterscheiden sich im Allgemeinen, da der obere Term noch eine Summation über alle räumlichen Datenströme enthält. Dieser Unterschied wird üblicherweise durch eine, dem Empfänger bekannte Wichtung $w$ des Basis-Kanalschätzsignals *C(k)* wieder ausgeglichen, d.h. z.B. $|C(k)|^2 = w \cdot E\{|I_{d,x}(k)|^2\}$

Hierbei kann sich folgendes Problem ergeben:

Falls $\sum_{\forall k} \sum_{m=1}^{M_T} |p_{k,m,x}|^2 \neq \mathrm{const}$ für alle $x = 1, ..., D$ schwankt die Leistung der Kanalschätzfolge in Abhängigkeit des o.g. Terms. Nachteilig ist hierbei, dass die verfügbare Leistung nicht optimal zur Kanalschätzung eingesetzt wird. Dieses Problem kann dadurch gelöst werden, dass eine Permutation der Spaltenvektoren von [P_*k*] durchgeführt

wird, so dass die Schwankungsbreite bzw. Varianz der Leistungswerte $\mathrm{P_x} = \sum_{\forall k} \sum_{m=1}^{M_T} |p_{k,m,x}|^2$ über alle x = 1, ..., D unter Berücksichtigung der Beziehung $p_{k,m,x} = 0$ für x > $D_k$ minimiert wird.

Beispiel:

Für alle Subträger *k* werden zunächst alle Spalten von [P_*k*] bzw. deren Spaltenvektoren der Größe nach sortiert, so dass $\sum_{m=1}^{M_T} |p_{k,m,x}|^2 \geq \sum_{m=1}^{M_T} |p_{k,m,z}|^2$ für z > x gilt. Nachfolgend werden diese Spaltenvektoren entsprechend der

Vorschrift $\mathrm{P}_{k,x} \rightarrow \mathrm{P}_{k,(x+k)\bmod D_k}$ einer zufälligen Permutation unterworfen.

Alternativ oder zusätzlich kann auch eine Signalisierungsfolge des Signalisierungsabschnitts SI für die jeweiligen Antennen festgelegt werden, um ein geeignetes MIMO-Übertragungssystem zu realisieren.

Gemäß Figur 5 enthält der Signalisierungsabschnitt SI Informationen über die physikalische Verarbeitung der Datenfolge, d.h. zum Beispiel die Anzahl der Datenströme pro Subträger k sowie deren Codierung und Modulation, der Länge des Datenpaketes, usw. Je nach Art der physikalischen Verarbeitung variiert der Umfang dieser Information, so dass im allgemeinen Fall davon auszugehen ist, dass mehr als ein OFDM-Symbol (in Figur 5 durch den Parameter V beschrieben) für ihre Übertragung erforderlich sein wird.

Um eine Überbestimmung bzw. "Overhead" zu vermeiden, sollte die Länge des Signalisierungsfeldes SI adaptiv an den Umfang der Information angepasst werden, was beispielsweise im ersten OFDM-Symbol angezeigt werden kann.

Damit die Informationen im Empfänger wiederum korrekt extrahiert werden können, müssen sie in einer vordefinierten Weise codiert sein, wobei die Art der Codierung wegen der Sensibilität dieser Information möglichst robust, d.h. fehlerunanfällig sein sollte. Das impliziert, dass die Übertragung möglichst im Diversity- und nicht im Multiplexing-Betrieb erfolgen sollte. Damit die Kanalschätzung ihre Gültigkeit bewahrt, wird auf allen parallelen räumlichen Datenströmen die selbe Information übertragen. Demzufolge ergibt sich die Signalisierungfolge a_m(n) aus einer Aneinander-reihung der OFDM Symbole *a_{m,x}(n)* entsprechend

$$a_m(n) = g_{m,1}(n) a_{m,1}(n) g_{m,2}(n) a_{m,2}(n) \cdots g_{m,V}(n) a_{m,V}(n)$$

mit

$$a_{m,x}(n) = \mathrm{DFT}^{-1}\{A_{m,x}(k)\} \quad \text{und} \quad A_{m,x}(k) = I_x^{\mathrm{sig}}(k) \cdot \sum_{d=1}^{D_k} p_{k,m,d} \qquad n = 1,...,N$$

sowie
sowie der OFDM-typischen Guard-Intervallfolge

$$g_{m,x}(n) = a_{m,x}(n + N - N_G) \qquad n = 1,...,N_G \; .$$

Für die Datenfolge im Datenfeld DA gilt dann die Gleichung

$$d_{m,x}(n) = \text{DFT}^{-1}\{D_{m,x}(k)\}$$

mit

$$D_{m,x}(k) = \sum_{d=1}^{D_k} p_{k,m,d} \cdot I_{d,x}(k) \text{ ,}$$

wobei $I_{d,x(k)}$ hierbei das Datensymbol bzw. die Information repräsentiert, die auf den d-ten räumlichen Datenstrom des k-ten Subträger des x-ten OFDM-Nutzdatensymbols, d.h. auf dem räumlichen, zeitlichen und spektralen Ressourceelement übertragen wird.

Obwohl gemäß Figur 5 die Signalisierungsstruktur SI im Zeitbereich zwischen einer Nutzdatenstruktur DA und dem Kanalschätzabschnitt KA der Präambelstruktur PS angeordnet ist, kann die Signalisierungsstruktur auch alternativ ausgebildet sein.

Fall 2:

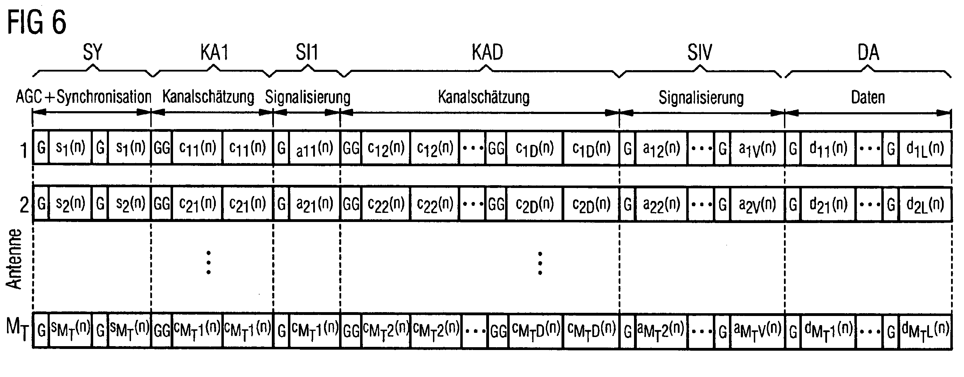

Für den Fall 2, wobei auch SISO-Stationen das Signalisierungsfeld bzw. die Signalisierungsstruktur SI auswerten können müssen, wird die in Figur 6 dargestellte Präambel- und Signalisierungsstruktur gemäß einem zweiten Ausführungsbeispiel vorgeschlagen. Gleiche Bezugszeichen bezeichnen hierbei gleiche oder entsprechende Datenfolgen, weshalb auf eine wiederholte Beschreibung nachfolgend verzichtet wird.

Gemäß Figur 6 wird eine alternative Präambel-bzw. Signalisierungsstruktur vorgeschlagen, wobei der Kanalschätzabschnitt KA mit einer Kanalschätzfolge $c_m(n)$ in einen ersten Teil-Kanalschätzabschnitt KA1 und einen zweiten Teil-Kanalschätzabschnitt KAD mit den Teil-Kanalschätzfolgen $c_m^1(n)$ sowie $c_m^2(n)$ und der Signalisierungsabschnitt SI in einen ersten Teil-Signalisierungsabschnitt SI1 und einen zweiten Teil-Signalisierungsabschnitt SIV mit den Teil-Signalisierungsfolgen $a_m^1(n)$ sowie $a_m^2(n)$ unterteilt und in der zeitlichen Reihenfolge erster Teil-Kanalschätzabschnitt KA1, erster Teil-Signalisierungsabschnitt SI1, zweiter Teil-Kanalschätzabschnitt KAD und zweiter Teil-Signalisierungsabschnitt SIV neu zusammengesetzt wird. In diesem Signalisierungsabschnitt wird die erste Teil-Signalisierungsfolge gemäß

$$a_m^1(n) = g_{m,1}(n)a_{m,1}(n)g_{m,2}(n)a_{m,2}(n)\cdots g_{m,V'}(n)a_{m,V'}(n)$$

und die zweite Teil-Signalisierungsfolge gemäß

$$a_m^2(n) = g_{m,V'+1}(n)a_{m,V'+1}(n)g_{m,V'+2}(n)a_{m,V'+2}(n)\cdots g_{m,V}(n)a_{m,V}(n)$$

mit

$$a_{m,x}(n) = \text{DFT}^{-1}\{A_{m,x}(k)\} \quad \text{und} \quad A_{m,x}(k) = \begin{cases} I_x^{\text{sig}}(k) \cdot p_{k,m,1} & \text{für} \quad 1 \leq x \leq V' \\ I_x^{\text{sig}}(k) \cdot \sum_{d=1}^{D_k} p_{k,m,d} & \text{für} \quad V' < x \leq V \end{cases}$$

sowie der OFDM-typischen Guard-Intervallfolge

$$g_{m,x}(n) = a_{m,x}(n+N-N_G) \qquad n = 1,...,N_G$$

gebildet.

Die verwendeten Kanalschätzfolgen entsprechen den vorstehend beschriebenen Kanalschätzfolgen, wobei beispielsweise für x = 1 der erste Teil-Kanalschätzabschnitt KA1 und für x = 2 bis D der zweite Teil- Teil-Kanalschätzabschnitt KAD festgelegt ist. Im Gegensatz zum Ausführungsbeispiel gemäß Figur 5 ist bei diesem zweiten Ausführungsbeispiel ein Teil der Signalisierung nach vorne gezogen und entspricht beispielsweise dem Signalisierungsfeld eines bereits existierenden SISO-Übertragungssystems. Auf diese Weise erhält man wiederum eine Abwärts- bzw. Rückwärtskompatibilität zu SISO-Übertragungssystemen (802.11a-Systeme).

Wahlweise kann auch die komplette Signalisierung nach vorne gezogen werden. In diesem Fall könnte der Parameter D als Teil der Signalisierungsinformation explizit mit übertragen werden, so dass die Anzahl der folgenden Kanalschätzsequenzen a-priori bekannt wäre.

Die Erfindung wurde vorstehend anhand eines OFDM-Übertragungssystems gemäß IEEE 802.11-Standard beschrieben. Sie ist jedoch nicht darauf beschränkt und umfasst in gleicher Weise auch alternative MIMO-OFDM-Übertragungssysteme.

**Patentansprüche**

1. Verfahren zum Erzeugen von Präambel- und Signalisierungsstrukturen für ein Datenpaket in einem MIMO-OFDM-Übertragungssystem mit einer Vielzahl von Antennen $(1, ..., M_T)$, wobei die Präambelstruktur (PS) für jede Antenne $(1, ..., M_T)$ einen Synchronisationsabschnitt (SY) mit einer Synchronisationsfolge und einen Kanalschätzabschnitt (KA) mit einer Kanalschätzfolge aufweist, und die Signalisierungsstruktur für jede Antenne mindestens einen Signalisierungsabschnitt (SI) mit jeweils einer Signalisierungsfolge aufweist, **dadurch gekennzeichnet, dass** die Synchronisationsfolge $s_m(n)$ für die jeweilige Antenne entsprechend der Beziehung

$$s_m(n) = \mathrm{DFT}^{-1}\{S_m(k)\} \quad \text{mit} \quad S_m(k) = S(k) \cdot e^{j\varphi_{k,m}} \qquad n = 1,...,N$$

oder entsprechend der Beziehung

$$s_m(n) = \mathrm{DFT}^{-1}\{S_m(k)\} \quad \text{mit} \quad S_m(k) = \sum_{d=1}^{D_k} p_{k,m,d} \cdot S(k) \cdot e^{j\varphi_{k,m,d}} \qquad n = 1,...,N$$

ermittelt wird, wobei S(k) ein Basis-Synchronisationssignal im Frequenzbereich, $m = 1, ..., M_T$ einen Antennenindex, $M_T$ eine Anzahl der Sendeantennen, n einen Abtastindex, $k$ einen Subträgerindex, $N$ die Anzahl der Abtastwerte pro OFDM Symbol, $d$ einen Index des räumlichen Datenstroms, $D_k$ die Anzahl der auf dem Subträger $k$ übertragenen räumlichen Datenströme, $p_{k,m,d}$ ein m-tes Zeilen- und d-tes Spaltenelement einer Matrix $P_k$, die zur räumlichen Vorverzerrung der Nutzdaten auf dem k-ten Subträger eingesetzt wird, $\varphi_{k,m}$ eine pseudo-zufällige frequenz- und antennenabhängige Phasendrehung und $\varphi_{x,m,d}$ eine pseudo-zufällige frequenz-, antennen- und raumabhängige Phasendrehung darstellt.

2. Verfahren nach Patentanspruch 1,
**dadurch gekennzeichnet, dass** der Synchronisationsfolge $s_m(n)$ ein OFDM-typisches Guard-Intervall (G) vorangestellt wird.

3. Verfahren nach Patentanspruch 1,
**dadurch gekennzeichnet, dass** der Synchronisationsfolge $s_m(n)$ ein im Vorzeichen invertiertes Guard-Intervall vorangestellt wird.

4. Verfahren nach einem der Patentansprüche 1 bis 3,
**dadurch gekennzeichnet, dass** die Synchronisationsfolge $s_m(n)$ mindestens einmal periodisch wiederholt wird.

5. Verfahren nach einem der Patentansprüche 1 bis 4,
**dadurch gekennzeichnet, dass** die Korrelation der Phasenwerte möglichst gering ist, entsprechend der Beziehung

$$E\{e^{j\varphi_{k,m}} \cdot e^{-j\varphi_{k+\Delta k,m+\Delta m}}\} \rightarrow \begin{cases} 1 & \text{für } \Delta k = 0 \wedge \Delta m = 0 \\ 0 & \text{sonst} \end{cases},$$

wobei E{...} den Erwartungswert darstellt.

**6.** Verfahren nach Patentanspruch 1 bis 5,
**dadurch gekennzeichnet, dass** die pseudozufällige frequenz- und antennenabhängige Phasendrehung der Gleichung

$$\varphi_{k,m} = \frac{2\pi k(m-1)}{M_T}$$

entspricht.

**7.** Verfahren nach einem der Patentansprüche 1 bis 4,
**dadurch gekennzeichnet, dass** das Basis-Synchronisationssignal die Gleichung

$$S(k)_{-26:26} = \sqrt{\frac{13}{6}}\{0,0,1+j,0,0,0,-1-j,0,0,0,1+j,0,0,0,-1-j,0,0,0,-1-j,0,0,0,1+j,0,0,0,0,$$
$$0,0,0,-1-j,0,0,0,-1-j,0,0,0,1+j,0,0,0,1+j,0,0,0,1+j,0,0,0,1+j,0,0\}$$

erfüllt.

**8.** Verfahren zum Erzeugen von Präambel- und Signalisierungsstrukturen für ein Datenpaket in einem MIMO-OFDM-Übertragungssystem mit einer Vielzahl von Antennen (1, ..., $M_T$), wobei die Präambelstruktur (PS) für jede Antenne (1, ..., $M_T$) einen Synchronisationsabschnitt (SY) mit einer Synchronisationsfolge und einen Kanalschätzabschnitt (KA) mit einer Kanalschätzfolge aufweist, und die Signalisierungsstruktur für jede Antenne mindestens einen Signalisierungsabschnitt (SI) mit jeweils einer Signalisierungsfolge aufweist,
**dadurch gekennzeichnet, dass** die Kanalschätzfolge $c_m(n)$ für die jeweilige Antenne aus einer Aneinanderreihung der OFDM Symbole $c_{m,x}(n)$ entsprechend

$$c_m(n) = g_{m,1}(n)c_{m,1}(n)g_{m,2}(n)c_{m,2}(n)\cdots g_{m,D}(n)c_{m,D}(n)$$

mit

$$c_{m,x}(n) = \mathrm{DFT}^{-1}\{C_{m,x}(k)\} \quad \text{und} \quad C_{m,x}(k) = \begin{cases} p_{k,m,x} \cdot C(k) & x \leq D_k \\ 0 & D_k < x \leq D \end{cases} \quad n = 1,...,N$$

wobei C(k) ein Basis-Kanalschätzsignal im Frequenzbereich, m = 1, ..., $M_T$ einen Antennenindex, $M_T$ eine Anzahl der Sendeantrennen, x = 1, ..., D einen Index des räumlichen Datenstroms, n einen Abtastindex, D die maximale Anzahl der räumlichen Datenströme über alle Subträger $D = \max_{\forall k} D_k$, $g_{m,x}(n)$ eine Guard-Intervallfolge eines Guard-Intervalls (G), k einen Subträgerindex, N die Anzahl der Abtastwerte pro OFDM Symbol und $p_{k,m,x}$ ein m-tes Zeilen- und x-tes Spaltenelement einer Matrix $P_k$, die zur räumlichen Vorverzerrung der Nutzdaten auf dem k-ten Subträger eingesetzt wird, darstellt.

**9.** Verfahren nach Patentanspruch 8
**dadurch gekennzeichnet, dass** die Kanalschätzfolge $c_m(n)$ mindestens einmal periodisch wiederholt wird

**10.** Verfahren nach einem der Patentansprüche 8,
**dadurch gekennzeichnet, dass** die Kanalschätzfolge $c_m(n)$ für die jeweilige Antenne aus einer Aneinanderreihung der OFDM Symbole $c_{m,x}(n)$ entsprechend

$$c_m(n) = g_{m,1}(n)\underbrace{c_{m,1}(n)\cdots c_{m,1}(n)}_{j}g_{m,2}(n)\underbrace{c_{m,2}(n)\cdots c_{m,2}(n)}_{j}\cdots g_{m,D}(n)\underbrace{c_{m,D}(n)\cdots c_{m,D}(n)}_{j}$$

gebildet wird, wobei j die Anzahl der Wiederholungen der OFDM Symbole $c_{m,x}(n)$ darstellt.

11. Verfahren nach einem der Patentansprüche 8 bis 10,
**dadurch gekennzeichnet, dass** ein Guard-Intervall (G, GG) aus der
einfachen OFDM-typischen Guard-Intervallfolge

$$g_{m,x}(n) = c_{m,x}(n + N - N_G) \qquad n = 1,...,N_G$$

oder aus der
doppelten OFDM-typischen Guard-Intervallfolge

$$g_{m,x}(n) = c_{m,x}(n + N - 2N_G) \qquad n = 1,...,2N_G$$

gebildet wird, wobei $N_G$ die Anzahl der Abtastwerte des Guard-Intervalls darstellt.

12. Verfahren nach einem der Patentansprüche 8 bis 11,
**dadurch gekennzeichnet, dass** das Basis-Kanalschätzsignal die Gleichung

$$C(k)_{-26:26} = \{1,1,-1,-1,1,1,-1,1,-1,1,1,1,1,1,1,-1,-1,1,1,-1,1,1,-1,1,1,1,1,0,$$
$$1,-1,-1,1,1,-1,1,-1,1,1,-1,-1,-1,-1,-1,1,1,-1,-1,1,1,-1,1,-1,1,1,1,1\}$$

erfüllt.

13. Verfahren nach einem der Patentansprüche 8 bis 12 **dadurch gekennzeichnet, dass** der Signalisierungsabschnitt (SI) im Zeitbereich zwischen einer Nutzdatenstruktur (DA) und dem Kanalschätzabschnitt (KA) angeordnet ist, wobei der Signalisierungsabschnitt (SI) eine Signalisierungsfolge $a_m(n)$ für die jeweilige Antenne enthält, die aus einer Aneinanderreihung der OFDM Symbole $a_{m,x}(n)$ entsprechend

$$a_m(n) = g_{m,1}(n)a_{m,1}(n)g_{m,2}(n)a_{m,2}(n)\cdots g_{m,V}(n)a_{m,V}(n)$$

mit

$$a_{m,x}(n) = \mathrm{DFT}^{-1}\{A_{m,x}(k)\} \quad \text{und} \quad A_{m,x}(k) = I_x^{sig}(k)\cdot\sum_{d=1}^{D_k}p_{k,m,d} \qquad n = 1,...,N$$

sowie der OFDM-typischen Guard-Intervallfolge

$$g_{m,x}(n) = a_{m,x}(n + N - N_G) \qquad n = 1,...,N_G$$

gebildet wird, wobei $A_{m,x}(k)$ ein x-tes Signalisierungssignal im Frequenzbereich, das über die m-te Antenne übertragen wird, und $I_x^{sig}(k)$ Signalisierungsinformation, die auf den k-ten Subträger des x-ten OFDM-Signalisierungssymbols übertragen wird, darstellen.

14. Verfahren nach einem der Patentansprüche 8 bis 12, **dadurch gekennzeichnet, dass** der Kanalschätzabschnitt (KA) mit einer Kanalschätzfolge $c_m(n)$ in einen ersten Teil-Kanalschätzabschnitt (KA1) und einen zweiten Teil-Kanalschätzabschnitt (KAD) mit den Teil-Kanalschätzfolgen $c_m^1(n)$ sowie $c_m^2(n)$ und der Signalisierungsabschnitt (SI) in einen ersten Teil-Signalisierungsabschnitt (SI1) und einen zweiten Teil-Signalisierungsabschnitt (SIV) mit den Teil-Signalisierungsfolgen $a_m^1(n)$ sowie $a_m^2(n)$ unterteilt und in der zeitlichen Reihenfolge erster Teil-Kanalschätzabschnitt (KA1), erster Teil-Signalisierungsabschnitt (SI1), zweiter Teil-Kanalschätzabschnitt (KAD) und zweiter Teil-Signalisierungsabschnitt (SIV) neu zusammengesetzt wird, wobei die erste und zweite Teil-Kanalschätzfolge entweder gemäß

$$c_m^1(n) = g_{m,1}(n)c_{m,1}(n)$$

$$c_m^2(n) = g_{m,2}(n)c_{m,2}(n)\cdots g_{m,D}(n)c_{m,D}(n)$$

oder gemäß

$$c_m^1(n) = g_{m,1}(n)\underbrace{c_{m,1}(n)\cdots c_{m,1}(n)}_{j}$$

$$c_m^2(n) = g_{m,2}(n)\underbrace{c_{m,2}(n)\cdots c_{m,2}(n)}_{j}\cdots g_{m,D}(n)\underbrace{c_{m,D}(n)\cdots c_{m,D}(n)}_{j}$$

unter Verwendung eines einfachen oder doppelten OFDM typischen Guard-Intervalls gebildet wird, und wobei die erste Teil-Signalisierungsfolge gemäß

$$a_m^1(n) = g_{m,1}(n)a_{m,1}(n)g_{m,2}(n)a_{m,2}(n)\cdots g_{m,V'}(n)a_{m,V'}(n)$$

und die zweite Teil-Signalisierungsfolge gemäß

$$a_m^2(n) = g_{m,V'+1}(n)a_{m,V'+1}(n)g_{m,V'+2}(n)a_{m,V'+2}(n)\cdots g_{m,V}(n)a_{m,V}(n)$$

mit

$$a_{m,x}(n) = \mathrm{DFT}^{-1}\{A_{m,x}(k)\} \quad \text{und} \quad A_{m,x}(k) = \begin{cases} I_x^{\mathrm{sig}}(k)\cdot p_{k,m,1} & \text{für} \quad 1 \le x \le V' \\ I_x^{\mathrm{sig}}(k)\cdot \sum\limits_{d=1}^{D_k} p_{k,m,d} & \text{für} \quad V' < x \le V' \end{cases} \qquad n = 1,...,N$$

sowie der OFDM-typischen Guard-Intervallfolge

$$g_{m,x}(n) = a_{m,x}(n + N - N_G) \qquad n = 1,...,N_G$$

gebildet wird, wobei j die Anzahl der Wiederholungen der OFDM Symbole $c_{m,x}(n)$, $A_{m,x}(k)$ ein $x$-tes Signalisierungssignal im Frequenzbereich, das über die m-te Antenne übertragen wird, und $I_x^{\mathrm{sig}}(k)$ Signalisierungsinformation, die auf den $k$-ten Subträger des $x$-ten OFDM-Signalisierungssymbols übertragen wird, darstellen und wobei V' eine Anzahl von OFDM-Symbolen bezeichnet, die zur Übertragung einer Teil-Signalisierungsinformation erforderlich ist, und V eine Anzahl von OFDM-Symbolen bezeichnet, die zur Übertragung einer Gesamt-Signalisierungsinformation erforderlich ist.

15. Verfahren nach einem der Patentansprüche 8 bis 14,
**dadurch gekennzeichnet, dass** der Synchronisationsabschnitt (SY) mit einer Synchronisationsfolge $s_m(n)$ nach

einem der Patentansprüche 1-7 zur Bildung einer gemeinsamen Präambel- und Signalisierungsstruktur (PS) vorangestellt wird.

16. Verfahren nach einem der Patentansprüche 8 bis 15,
**dadurch gekennzeichnet, dass** die Spaltenvektoren $P_{k,x}$, x = 1, ..., $D_k$, der Matrik $P_k$ so sortiert werden, dass die Varianz der Leistungswerte

$$P_x = \sum_{\forall k} \sum_{m=1}^{M_T} \left| p_{k,m,x} \right|^2 \qquad x = 1,...,D$$

unter Berücksichtigung der Beziehung $p_{k,m,x}$ = 0 für $x > D_k$ möglichst klein wird.

17. Verfahren nach einem der Patentansprüche 8 bis 15,
**dadurch gekennzeichnet, dass** für jeden Subträger $k$ die Spaltenvektoren $P_{k,x}$, mit x = 1, ..., $D_k$, der räumlichen Vorverzerrungsmatrix $P_k$ in einem ersten Schritt der Größe nach derart sortiert werden, so dass

$$\sum_{m=1}^{M_T} \left| p_{k,m,x} \right|^2 \geq \sum_{m=1}^{M_T} \left| p_{k,m,z} \right|^2 \qquad \text{für} \quad z > x$$

erfüllt ist, und in einem zweiten Schritt einer zufälligen Permutation unterworfen werden.

18. Verfahren nach Patentanspruch 17,
**dadurch gekennzeichnet, dass** die Permutation der Spaltenvektoren entsprechend der Vorschrift $P_{k,x} \to P_{k,(x+k)\bmod Dk}$ durchgeführt wird.

19. Verfahren nach einem der Patentansprüche 1 bis 18,
**dadurch gekennzeichnet, dass** das OFDM-Übertragungssystem gemäß IEEE 802.11-Standard ausgelegt ist.

**Claims**

1. Method for generating preamble and signaling structures for a data packet in a MIMO-OFDM transmission system comprising a plurality of antennas (1, ..., $M_T$), wherein the preamble structure (PS) for each antenna (1, ..., $M_T$) comprises a synchronisation portion (SY) including a synchronisation sequence and a channel estimation portion (KA) including a channel estimation sequence, and wherein the signaling structure for each antenna comprises at least one signaling portion (SI) each including one signaling sequence;
**characterized in that**
the synchronisation sequence $s_m(n)$ for the respective antenna is determined according to the relation

$$s_m(n) = DFT^{-1}\{S_m(k)\} \quad \text{with} \quad S_m(k) = S(k) \cdot e^{j\varphi_{k,m}} \quad n = 1,...,N$$

or according to the relation

$$s_{m(n)} = DFT^{-1}\{S_m(k)\} \quad \text{with} \quad S_m(k) = \sum_{d=1}^{D_k} p_{k,m,d} \cdot S(k) \cdot e^{j\varphi_{k,m,d}} \quad n = 1,...,N$$

wherein $S(k)$ denotes a basis synchronisation signal within the frequency domain, $m$ = 1, ... , $M_T$ an antenna index, $M_T$ a number of transmission antennas, $n$ a sampling index, $k$ a subcarrier index, $N$ the number of sample values per OFDM symbol, $d$ an index of the spatial data stream, $D_k$ the number of the spatial data streams transmitted in the *subcarrier k*, $p_{k,m,d}$ a $m$-th line and $d$-th column element of a matrix $P_k$ used for spatial pre-equalization of the payload on the $k$-th subcarrier, $\varphi_{k,m}$ a pseudo-random frequency and antenna dependent phase rotation and $\varphi_{k,m,d}$

a pseudo-random frequency, antenna and space dependent phase rotation.

2. Method according to claim 1, **characterized in that**
   the synchronisation sequence $s_m(n)$ is preceded with an OFDM typical guard intervall (G).

3. Method according to claim 1, **characterized in that**
   the synchronisation sequence $s_m(n)$ is preceded with a sign inverted guard intervall.

4. Method according to any one of the claims 1 to 3, **characterized in that**
   the synchronisation sequence $s_m(n)$ is repeated periodically at least once.

5. Method according to any one of the claims 1 to 4, **characterized in that**
   the correlation of the phase values is as small as possible according to the relation

$$E\{e^{j\varphi_{k,m}} \cdot e^{-j\varphi_{k+\Delta k,m+\Delta m}}\} \to \begin{cases} 1 & \text{for } \Delta k = 0 \wedge \Delta m = 0 \\ 0 & else \end{cases},$$

wherein $E\{...\}$ represents the expected value.

6. Method according to any one of the claims 1 to 5, **characterized in that**
   the pseudo-random frequency and antenna dependent phase rotation corresponds to the equation

$$\varphi_{k,m} = \frac{2\pi k(m-1)}{M_T}$$

7. Method according to any one of the claims 1 to 4, **characterized in that**
   the basis synchronisation signal meets the equation

$$S(k)_{-26:26} = \sqrt{\frac{13}{6}}\ \{0,0,1+j,0,0,0,-1-j,0,0,0,1+j,0,0,0,-1-j,0,0,0,-1-j,0,0,0,1+j,0,0,0,0,$$
$$0,0,0,-1-j,0,0,0,-1-j,0,0,0,1+j,0,0,0,1+j,0,0,0,1+j,0,0,0,1+j,0,0\}\ .$$

8. Method for generating preamble and signaling structures for a data packet in a MIMO-OFDM transmission system
   comprising a plurality of antennas (1, ..., $M_T$), wherein the preamble structure (PS) for each antenna (1, ..., $M_T$)
   comprises a synchronisation portion (SY) including a synchronisation sequence and a channel estimation portion
   (KA) including a channel estimation sequence, and wherein the signaling structure for each antenna comprises at
   least one signaling portion (SI) each including one signaling sequence;
   **characterized in that**
   the channel estimation sequence $c_m(n)$ for the respective antenna is determined by forming a succession of the
   OFDM symbols $c_{m,x}(n)$ according to

$$c_m(n) = g_{m,1}(n)c_{m,1}(n)g_{m,2}(n)c_{m,2}(n) \ldots g_{m,D}(n)c_{m,D}(n)$$

with

$$c_{m,x}(n) = DFT^{-1}\{C_{m,x}(k)\} \text{ and } C_{m,x}(k) = \begin{cases} p_{k,m,x} \cdot C(k) & x \le D_k \\ 0 & D_k < x \le D \end{cases}$$
$$n = 1,\ldots,N$$

wherein C($k$) denotes a basis channel estimation signal within the frequency domain, $m = 1, ..., M_T$ an antenna
index, $M_T$ a number of transmission antennas, $x = 1,..., D$ an index of the spatial data stream, $n$ a sampling index,

$D$ the maximum number of the spatial data streams over all subcarrier $D = \max_{\forall k} D_k$, $g_{m,x}(n)$ a guard intervall sequence
of a guard intervall (G), $k$ a subcarrier index, $N$ the number of sample values per OFDM symbol and $p_{k,m,x}$ a $m$-th
line and x-th column element of a matrix $P_k$ which is used for the spatial pre-equalization of the payload on the k-th subcarrier.

9. Method according to claim 8, **characterized in that** the channel estimation sequence $c_m(n)$ is repeated periodically at least once.

10. Method according to claim 8, **characterized in that** the channel estimation sequence $c_m(n)$ for the respective antenna is formed by a succession of the OFDM symbols $c_{m,x}(n)$ according to

$$c_m(n) = g_{m,1}(n)\underbrace{c_{m,1}(n) \ldots c_{m,1}(n)}_{j} g_{m,2}(n)\underbrace{c_{m,2}(n) \ldots c_{m,2}(n)}_{j} \ldots g_{m,D}(n)\underbrace{c_{m,D}(n) \ldots c_{m,D}(n)}_{j}$$

wherein $j$ denotes the number of repetitions of the OFDM symbols $c_{m,x}(n)$.

11. Method according to any one of the claims 8 to 10, **characterized in that**
a guard interval ($G$, $GG$) is Formed from the single OFDM typical Guard interval sequence

$$g_{m,x}(n) = c_{m,x}(n+N-N_G) \qquad n = 1,\ldots, N_G$$

or from the double OFDM typical guard interval sequence

$$g_{m,x}(n) = c_{m,x}(n+N-2N_G) \qquad n = 1,\ldots, 2N_G,$$

wherein $N_G$ denotes the number of sample values of the guard interval.

12. Method according to any one of the claims 8 to 11, **characterized in that** the basis channel estimation signal meets the equation

$$C(k)_{-26:26} = \{1,1,-1,-1,1,1,-1,1,-1,1,1,1,1,1,1,1,-1,-1,1,1,-1,1,-1,1,1,1,1,0,$$
$$1,-1,-1,1,1,-1,1,-1,1,-1,-1,-1,-1,-1,1,1,-1,-1,1,-1,1,1,-1,1,1,1,1\}.$$

13. Method according to any one of the claims 8 to 12, **characterized in that** the signaling portion (SI) is arranged in the time domain between a payload structure (DA) and the channel estimation portion (KA), wherein the signaling portion (SI) comprises a signaling sequence $a_m(n)$ for the respective antenna which is formed by a succession of the OFDM symbols $a_{m,x}(n)$ according to

$$a_m(n) = g_{m,1}(n)a_{m,1}(n)g_{m,2}(n)a_{m,2}(n) \ldots g_{m,V}(n)a_{m,V}(n)$$

with

$$a_{m,x}(n) = DFT^{-1}\{A_{m,x}(k)\}$$

and

$$A_{m,x}(k) = I_x^{stg}(k) \cdot \sum_{d=1}^{D_k} p_{k,m,d}$$

$n = 1,\ldots, N$
as well as the OFDM typical guard inteval sequence

$$g_{m,x}(n)=a_{m,x}(n+N-N_G) \quad n = 1,...,N_G$$

wherein $A_{m,x}(k)$ denotes a $x$-th signaling signal within the frequency domain which is transmitted over the $m$-th antenna and $I_x^{sig}(k)$ denotes signaling information which is transmitted on the k-th subcarrier of the x-th OFDM signaling symbol.

14. Method according to any one of the claims 8 to 12, **characterized in that** the channel estimation portion (KA) comprising a channel estimation sequence $c_m(n)$ is divided into a first partial channel estimation portion (KA1) and a second partial channel estimation portion (KAD) including the partial channel estimation sequences $c_m^1(n)$ and $c_m^2(n)$ and the signaling portion (SI) is divided into a first partial signaling portion (SII) and a second partial signaling portion (SIV) including the partial signaling sequences $a_m^1(n)$ and $a_m^2(n)$ and is reassembled in the following temporal sequence: first partial channel estimation portion (KA1), first partial signaling portion (SI1), second partial channel estimation portion (KAD) and second partial signaling portion (SIV), wherein the first and the second partial channel estimation sequence is formed either according to

$$c_m^1(n)=g_{m,1}(n)c_{m,1}(n)$$

$$c_m^2(n)=g_{m,2}(n)c_{m,2}(n)...g_{m,D}(n)c_{m,D}(n)$$

or according to

$$c_m^1(n)=g_{m,1}(n)\underbrace{c_{m,1}(n)...c_{m,1}(n)}_{j}$$

$$c_m^2(n)=g_{m,2}(n)\underbrace{c_{m,2}(n)...c_{m,2}(n)}_{j}...g_{m,D}(n)\underbrace{c_{m,D}(n)...c_{m,D}(n)}_{j}$$

by use of a single or double OFDM typical guard interval, and wherein the first partial signaling sequence is formed according to

$$a_m^1(n)=g_{m,1}(n)a_{m,1}(n)g_{m,2}(n)a_{m,2}(n)...g_{m,V'}(n)a_{m,V'}(n)$$

and wherein the second partial signaling sequence is formed according to

$$a_m^2(n)=g_{m,V'+1}(n)a_{m,V'+1}(n)g_{m,V'+2}(n)a_{m,V'+2}(n)...g_{m,V}(n)a_{m,V}(n)$$

with

$$a_{m,x}(n) = DFT^{-1}\{A_{m,x}(k)\} \;\; \text{and} \;\; A_{m,x}(k) = \begin{cases} I_x^{sig}(k) \cdot p_{k,m,1} & \text{for } 1 \leq x \leq V' \\ I_x^{sig}(k) \cdot \sum_{d=1}^{D} p_{k,m,d} & \text{for } V' < x \leq V \end{cases}$$

$$n = 1,...,N$$

as well as the OFDM typical guard interval sequence

$$g_{m,x}(n)=a_{m,x}(n+N-NG) \quad n = 1,..., N_G,$$

wherein $j$ denotes the number of repetitions of the OFDM symbols $c_{m,x}(n)$, $A_{m,x}(k)$ a x-th signaling signal in the frequency domain which is transmitted over the $m$-th antenna, and $l_x^{sig}(k)$ signaling information which is transmitted on the $k$-th subcarrier of the x-ch OFDM signaling symbol, and wherein $V'$ denotes a number of OFDM symbols required for transmitting a partial signaling information and V a number of OFDM symbols required for transmitting the entire signaling information.

15. Method according to any one of the claims 8 to 14, **characterized in that** the synchronisation portion (SY) is preceded with a synchronisation sequence $s_m(n)$ according to any one of the claims 1 to 7 for forming a common preamble and signaling structure (PS).

16. Method according to any one of the claims 8 to 15, **characterized in that** the column vectors $P_{k,x}$, $x = 1,..., D_k$ of the matrix $P_k$ are sorted such that the variance of the power values

$$P_x \sum_{\forall k} \sum_{m=1}^{M_T} |p_{k,m,x}|^2 \qquad x = 1,..., D$$

taking into consideration the relation $p_{k,m,x} = 0$ for $x > D_k$ is as small as possible.

17. Method according to any one of the claims 8 to 15, **characterized in that** for each subcarrier k the comlumn vectors $P_{k,x}$, $x = 1,..., D_k$, of the spatial pre-equalization matrix $P_k$ is sorted in a first step according to the size such that

$$\sum_{m=1}^{M_T} |p_{k,m,x}|^2 \geq \sum_{m=1}^{M_T} |p_{k,m,z}|^2 \qquad \text{for } z > x$$

is met and in a second step are subjected to a random permutation.

18. Method according to claim 17, **characterized in that** the permutation of the column vectors is executed according to the rule $P_{x,k} \rightarrow P_{k,(x+k)mod D_k}$.

19. Method according to any one of the claims 1 to 18, **characterized in that** the OFDM transmission system is designed according to the IEEE 802.11 standard.

**Revendications**

1. Procédé pour générer des structures de préambule et de signalisation pour un paquet de données dans un système de transmission MIMO-OFDM avec une pluralité d'antennes (1, ..., $M_T$), la structure de préambule (PS) comportant pour chaque antenne (1, ..., $M_T$) une partie de synchronisation (SY) avec une séquence de synchronisation et une partie d'estimation de canal (KA) avec une séquence d'estimation de canal et la structure de signalisation comportant pour chaque antenne au moins une partie de signalisation (SI) avec respectivement une séquence de signalisation, **caractérisé en ce que** la séquence de synchronisation $s_m(n)$ pour l'antenne respective est déterminée selon la relation

$$s_m(n) = DFT^{-1}\{S_m(k)\} \text{ avec } S_m(k) = S(k) \cdot e^{j\theta_m} \qquad n = 1,...,N$$

ou selon la relation

$$s_m(n) = DFT^{-1}\{S_m(k)\} \text{ avec } S_m(k) = \sum_{d=1}^{D_k} p_{k,m,d} \cdot S(k) \cdot e^{j\theta_{m,d}} \qquad n = 1,...,N$$

*S(k)* représentant un signal de synchronisation de base dans le domaine fréquentiel, $m = 1$, ..., $M_T$ un indice d'antenne, $M_T$ un nombre d'antennes émettrices, n un indice d'échantillonnage, *k* un indice de sous-porteuse, *N* le nombre des valeurs échantillonnées par symbole OFDM, *d* un indice du flux de données spatial, $D_k$ le nombre des flux de données spatiaux transmis sur la sous-porteuse k, $p_{k,m,d}$ un élément de la m-ème ligne et de la d-ème colonne d'une matrice $P_k$, qui est utilisée pour la prédistorsion spatiale des données utiles sur la k-ème sous-porteuse, $\varphi_{k,m}$ une rotation de phase pseudo-aléatoire, dépendante de la fréquence et de l'antenne, et $\varphi_{k,m,d}$ une rotation de phase pseudo-aléatoire, dépendante de la fréquence, de l'antenne et de l'espace.

2. Procédé selon la revendication 1, **caractérisé en ce qu'**un intervalle de garde (G) typique de l'OFDM est placé avant la séquence de synchronisation $s_m(n)$.

3. Procédé selon la revendication 1, **caractérisé en ce qu'**un intervalle de garde au signe inversé est placé avant la séquence de synchronisation $S_m(n)$.

4. Procédé selon l'une des revendications 1 à 3, **caractérisé en ce que** la séquence de synchronisation $s_m(n)$ est répétée au moins une fois périodiquement.

5. Procédé selon l'une des revendications 1 à 4, **caractérisé en ce que** la corrélation des valeurs de phase est la plus petite possible, selon la relation

$$E\{e^{j\varphi_{k,m}} \cdot e^{-j\varphi_{k+\Delta k,m+\Delta m}}\} \rightarrow \begin{cases} 1 & \text{pour } \Delta k = 0 \wedge \Delta m = 0 \\ 0 & \text{sinon} \end{cases},$$

E{...} représentant la valeur escomptée.

6. Procédé selon la revendication 1 à 5, **caractérisé en ce que** la rotation de phase pseudo-aléatoire, dépendante de la fréquence et de l'antenne, correspond à l'équation :

$$\varphi_{k,m} = \frac{2\pi k(m-1)}{M_T}$$

7. Procédé selon l'une des revendications 1 à 4, **caractérisé en ce que** le signal de synchronisation de base satisfait l'équation :

$$S(k)_{-26,26} = \sqrt{\frac{13}{6}}\{0,0,1+j,0,0,0,-1-j,0,0,0,1+j,0,0,0,-1-j,0,0,0,-1-j,0,0,0,1+j,0,0,0,0,$$
$$0,0,0,-1-j,0,0,0,-1-j,0,0,0,1+j,0,0,0,1+j,0,0,0,1+j,0,0,0,1+j,0,0\}$$

8. Procédé pour générer des structures de préambule et de signalisation pour un paquet de données dans un système de transmission MIMO-OFDM avec une pluralité d'antennes (1, ..., $M_T$), la structure de préambule (PS) comportant pour chaque antenne (1, ..., $M_T$) une partie de synchronisation (SY) avec une séquence de synchronisation et une partie d'estimation de canal (KA) avec une séquence d'estimation de canal et la structure de signalisation comportant pour chaque antenne au moins une partie de signalisation (SI) avec respectivement une séquence de signalisation, **caractérisé en ce que** la séquence d'estimation de canal $c_m(n)$ pour l'antenne respective est formée d'une juxtaposition des symboles OFDM $c_{m,x}(n)$ selon

$$c_m(n) = g_{m,1}(n)c_{m,1}(n)g_{m,2}(n)c_{m,2}(n)\cdots g_{m,D}(n)c_{m,D}(n)$$

avec

$$c_{m,x}(n) = \text{DFT}^{-1}\{C_{m,x}(k)\}$$

et

$$C_{m,x}(k) = \begin{cases} p_{k,m,x} \cdot C(k) & x \le D_k \\ 0 & D_k < x \le D \end{cases} \qquad n = 1,...,N$$

$C(k)$ représentant un signal d'estimation de canal de base dans le domaine fréquentiel, m = 1, ..., $M_T$ un indice d'antenne, $M_T$ un nombre d'antennes émettrices, x = 1, ..., D un indice du flux de données spatial, n un indice d'échantillonnage. D le nombre maximal des flux de données spatiaux sur toutes les sous-porteuses D = $\max_{\forall k} D_k$, $g_{m,x}(n)$ une séquence d'intervalle de garde d'un intervalle de garde (G), k un indice de sous-porteuse, N le nombre des valeurs échantillonnées par symbole OFDM et $p_{k,m,x}$ l'élément de la m-ème ligne et de la x-ème colonne d'une matrice $P_k$ qui est utilisée pour la prédistorsion spatiale des données utiles sur la k-ème sous-porteuse.

9. Procédé selon la revendication 8, **caractérisé en ce que** la séquence d'estimation de canal $c_m(n)$ est répétée au moins une fois périodiquement.

10. Procédé selon l'une des revendications 8 à 9, **caractérisé en ce que** la séquence d'estimation de canal $c_m(n)$ pour l'antenne respective est formée à partir d'une juxtaposition des symboles OFDM $c_{m,x}(n)$ selon la relation

$$c_m(n) = g_{m,1}(n)\underbrace{c_{m,1}(n)\cdots c_{m,1}(n)}_{j}g_{m,2}(n)\underbrace{c_{m,2}(n)\cdots c_{m,2}(n)}_{j}\cdots g_{m,D}(n)\underbrace{c_{m,D}(n)\cdots c_{m,D}(n)}_{j}$$

j représentant le nombre des répétitions des symboles OFDM $c_{m,x}(n)$.

11. Procédé selon l'une des revendications 8 à 10, **caractérisé en ce qu'**un intervalle de garde (G, GG) est formé à partir de la simple séquence d'intervalle de garde typique de L'OFDM

$$g_{m,x}(n) = c_{m,x}(n + N - N_G) \qquad n = 1,...,N_G$$

ou à partir de la double séquence d'intervalle de garde typique de l'OFDM,

$$g_{m,x}(n) = c_{m,x}(n + N - 2N_G) \qquad n = 1,...,2N_G$$

$N_G$ représentant le nombre des valeurs échantillonnées de l'intervalle de garde.

12. Procédé selon l'une des revendications 8 à 11, **caractérisé en ce que** le signal d'estimation de canal de base satisfait l'équation

$$C(k)_{-26:26} = \{1,1,-1,-1,1,1,-1,1,-1,1,1,1,1,1,1,-1,-1,1,1,-1,1,-1,1,1,1,1,0,$$
$$1,-1,-1,1,1,-1,1,-1,1,-1,1,-1,-1,-1,-1,-1,1,1,-1,-1,1,-1,1,-1,1,1,1,1\}$$

13. Procédé selon l'une des revendications 8 à 12. **caractérisé en ce que** la partie de signalisation (SI) est agencée dans le domaine temporel entre une structure de données utiles (DA) et la partie d'estimation de canal (KA), la partie de signalisation (SI) contenant une séquence de signalisation $a_m(n)$ pour l'antenne respective. laquelle est formée d'une juxtaposition des symboles OFDM $a_{m,x}(n)$ selon

$$a_m(n) = g_{m,1}(n)a_{m,1}(n)g_{m,2}(n)a_{m,2}(n)\cdots g_{m,V}(n)a_{m,V}(n)$$

avec

$$a_{m,x}(n) = \text{DFT}^{-1}\{A_{m,x}(k)\}$$

et

$$A_{m,x}(k) = I_x^{\text{sig}}(k) \cdot \sum_{d=1}^{D_k} p_{k,m,d} \qquad n = 1, \ldots, N$$

et la séquence d'intervalle de garde typique de l'OFDM

$$g_{m,x}(n) = a_{m,x}(n + N - N_G) \qquad n = 1, \ldots, N_G$$

$A_{m,x}(k)$ représentant un x-ème signal de signalisation dans le domaine fréquentiel qui est transmis par l'intermédiaire de la m-ème antenne et $I_x^{\text{sig}}(k)$ représentant de l'information de signalisation qui est transmise sur la k-ème sous-porteuse du x-ème symbole de signalisation OFDM.

14. Procédé selon l'une des revendications 8 à 12, **caractérisé en ce que** la partie d'estimation de canal (KΛ) avec une séquence d'estimation de canal $c_m(n)$ est divisée en une première sous-partie d'estimation de canal (KAI) et en une seconde sous-partie d'estimation de canal (KAD) avec les sous-séquences d'estimation de canal $c_m^1(n)$ ainsi que $c_m^2(n)$, la partie de signalisation (SI) est divisée en une première sous-partie de signalisation (D11) et en une seconde sous-partie de signalisation (SIV) avec les sous-séquences de signalisation $a_m^1(n)$ ainsi que $a_m^2(n)$ et **en ce qu'**elles sont recomposées dans l'ordre temporel : première sous-partie d'estimation de canal (KΛI), première sous-partie de signalisation (SI1), second sous-partie d'estimation de canal (KAD) et seconde sous-partie de signalisation (SIV),
la première et la seconde sous-séquence d'estimation de canal étant formées selon

$$c_m^1(n) = g_{m,1}(n)c_{m,1}(n)$$

$$c_m^2(n) = g_{m,2}(n)c_{m,2}(n)\cdots g_{m,D}(n)c_{m,D}(n)$$

ou selon la relation

$$c_m^1(n) = g_{m,1}(n)\underbrace{c_{m,1}(n)\cdots c_{m,1}(n)}_{j}$$

$$c_m^2(n) = g_{m,2}(n)\underbrace{c_{m,2}(n)\cdots c_{m,2}(n)}_{j}\cdots g_{m,D}(n)\underbrace{c_{m,D}(n)\cdots c_{m,D}(n)}_{j}$$

en utilisant un intervalle de garde simple ou double typique de l'OFDM, la première sous-séquence de signalisation étant formée selon

$$a_m^1(n) = g_{m,1}(n)a_{m,1}(n)g_{m,2}(n)a_{m,2}(n)\cdots g_{m,V'}(n)a_{m,V'}(n)$$

et la seconde sous-séquence de signalisation étant formée selon

$$a_m^2(n) = g_{m,V'+1}(n)a_{m,V'+1}(n)g_{m,V'+2}(n)a_{m,V'+2}(n)\cdots g_{m,V}(n)a_{m,V}(n)$$

avec

$$a_{m,x}(n) = \text{DFT}^{-1}\{A_{m,x}(k)\}$$

et

$$A_{m,x}(k) = \begin{cases} I_x^{sig}(k) \cdot p_{k,m,1} & \text{pour} \quad 1 \le x \le V' \\ I_x^{sig}(k) \cdot \sum_{d=1}^{D_k} p_{k,m,d} & \text{pour} \quad V' < x \le V' \end{cases} \qquad n = 1,...,N$$

ainsi que la séquence d'intervalle de garde typique de l'OFDM

$$g_{m,x}(n) = a_{m,x}(n + N - N_G) \qquad n = 1,...,N_G$$

j représentant le nombre des répétitions des symboles OFDM $c_{m,x}(n)$, $A_{m,x}(k)$ un x-ème signal de signalisation dans le domaine fréquentiel qui est transmis par l'intermédiaire de la m-ème antenne et $I_x^{sig}(k)$ de l'information de signalisation qui est transmise sur la k-ème sous-porteuse du x-ème symbole de signalisation OFDM, V' désignant un nombre de symboles OFDM qui est nécessaire à la transmission d'une sous-information de signalisation et V désignant un nombre de symboles OFDM qui est nécessaire à la transmission d'une information de signalisation complète.

**15.** Procédé selon l'une des revendications 8 à 14, caractérisé en cc que la partie de synchronisation (SY) avec une séquence de synchronisation $s_m(n)$ selon l'une des revendications 1 à 7 est placée avant pour la formation d'une structure de préambule et de signalisation commune (PS).

**16.** Procédé selon l'une des revendications 8 à 15, **caractérisé en ce que** les vecteurs colonnes $P_{k,x}$, x = 1, ..., $D_k$, de la matrice $P_k$ sont triés de telle sorte que la variance des valeurs de puissance

$$P_x = \sum_{\forall k}\sum_{m=1}^{M_x}|p_{k,m,x}|^2 \qquad x = 1,...,D$$

en tenant compte de la relation $p_{k,m,x} = 0$ pour x > $D_k$ devienne minimale.

**17.** Procédé selon l'une des revendications 8 à 15, **caractérisé en ce que**, pour chaque sous-porteuse k, les vecteurs colonnes $P_{k,x}$, avec x = 1, ..., $D_k$, de la matrice de prédistorsion spatiale $P_k$ sont triés dans une première étape selon leur dimension de telle sorte que

$$\sum_{m=1}^{M_x}|p_{k,m,x}|^2 \ge \sum_{m=1}^{M_x}|p_{k,m,z}|^2 \qquad \text{pour} \quad z > x$$

est satisfait, et sont soumis dans une seconde étape à une permutation aléatoire.

**18.** Procédé selon la revendication 17, **caractérisé en ce que** la permutation des vecteurs colonnes est effectuée selon la règle $P_{k,x} \to P_{k,(x+k)mod D_k}$.

**19.** Procédé selon l'une des revendications 1 à 18, **caractérisé en ce que** le système de transmission OFDM est conçu selon le standard IEEE 802.11.

# FIG 1 Stand der Technik

EP 1 779 624 B1

## FIG 2  Stand der Technik

PS

SY | KA

AGC + Synchronisation | Kanalschätzung

| G | s(n) | G | s(n) | GG | c(n) | c(n) |

Guard-Interval

## FIG 3  Stand der Technik

SI

| RATE (4 bits) | | | | LÄNGE (12 bits) | | | | | | | | | | | | | SIGNAL TAIL (6 bits) | | | | | |
|---|---|---|---|---|---|---|---|---|---|---|---|---|---|---|---|---|---|---|---|---|---|---|
| R1 | R2 | R3 | R4 | R | LSB | | | | | | | | | | | MSB | P | "0" | "0" | "0" | "0" | "0" | "0" |
| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |

Übertragungs Reihenfolge

28

# FIG 4 Stand der Technik

| R1 R2 R3 R4 | Datenrate [Mbit/s] |
|---|---|
| 1101 | 6 |
| 1111 | 9 |
| 0101 | 12 |
| 0111 | 18 |
| 1001 | 24 |
| 1011 | 36 |
| 0001 | 48 |
| 0011 | 54 |
| R | Reserviert für zukünftigen Gebrauch |
| R5-R16 | Anzahl von Okteten in PSDU→ Übertragungszeit TXTIME wird von LÄNGE und RATE Feld abgeleitet |
| R17 | Parity-Überprüfung |
| R18-R23 | Tail bits (zum Steuern des Convolutional Decoders in den Null-Zustand) |

FIG 5

FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **JIANHUA LIU et al.** A MIMO system with backward compatibility for OFDM based WLANs. *4TH IEEE WORKSHOP ON SIGNAL PROCESSING ADVANCES IN WIRELESS COMMUNICATIONS,* 15. Juni 2003, ISBN 0-7803-7858-X, 130-134